(19) Europäisches Patentamt
European Patent Office
Office européen des brevets

(11) EP 3 778 770 A1

(12) **EUROPEAN PATENT APPLICATION**

(43) Date of publication:
**17.02.2021 Bulletin 2021/07**

(21) Application number: **19290071.0**

(22) Date of filing: **16.08.2019**

(51) Int Cl.:
***C08L 63/00*** *(2006.01)* ***C09D 163/00*** *(2006.01)*
***C08G 59/50*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ImerTech SAS**
**75015 Paris (FR)**

(72) Inventor: **The designation of the inventor has not yet been filed**

(74) Representative: **Haseltine Lake Kempner LLP**
**Redcliff Quay**
**120 Redcliff Street**
**Bristol BS1 6HU (GB)**

(54) **FLOOR COATING COMPOSITION**

(57) A resin or curing agent composition for making a coating composition, a kit for making a coating composition, and a dry coating composition, particularly for application to flooring materials, and methods for making said compositions.

EP 3 778 770 A1

## Description

### TECHNICAL FIELD

The present invention relates generally to compositions and kits suitable for making coating compositions, particularly waterborne coating compositions. The present invention also relates to coating compositions, particularly dry coating compositions, that may be made using said compositions and kits, and methods for making said compositions and coating compositions. The present invention further relates to the use of mica to improve the hot tire resistance of a coating composition, particularly a coating composition for a floor.

### BACKGROUND

It is generally desirable to improve certain properties of coating compositions for different applications of the coating compositions. For example, it is desirable to improve the mechanical properties of coating compositions such as hot tire resistance of coating compositions used in applications such as floor coatings.

It is also desirable to use waterborne coating compositions rather than solvent-based coating compositions due to environmental regulations. Waterborne coating compositions, for example using epoxy resins, may be used for industrial floor coatings. However, waterborne coating compositions do not achieve the same level of performance as solvent-based coating compositions for mechanical properties such as hot tire resistance.

Barite may be used to control the rheology of the coating composition. However, barite is not known to provide mechanical reinforcement to the coating composition. Silica may be used to improve the abrasion resistance of the coating composition. However, silica is not known to improve other mechanical properties of the coating composition such as hot tire resistance.

It is therefore desirable to provide compositions suitable for making coating compositions, particularly waterborne coating compositions, which have improved hot tire resistance. It is further desirable to improve the hot tire resistance of a coating composition whilst maintaining an acceptable performance in other areas such as pot life, drying time, application properties, viscosity, abrasion resistance, hardness, adhesion, stain resistance, flexibility, cracking resistance, and vapour permeability.

### SUMMARY

In accordance with a first aspect of the present invention there is provided a resin composition for use in a coating composition comprising:

(i) anepoxy resin;
(ii) barite; and
(iii) mica;

wherein the weight ratio of barite to mica is equal to or greater than about 2.0; and
wherein the resin composition further comprises from 0 wt% to about 10 wt% of silica, based on the total solids content of the resin composition.

In accordance with a second aspect of the present invention there is provided a curing agent composition for use in a coating composition, the curing agent composition comprising:

(i) an amine curing agent;
(ii) barite; and
(iii) mica;

wherein the weight ratio of barite to mica is equal to or greater than about 2.0; and
wherein the curing agent composition further comprises from 0 wt% to about 10 wt% of silica, based on the total solids content of the curing agent composition.

In accordance with a third aspect of the present invention there is provided a dry coating composition comprising:

(i) an epoxy resin cross-linked with an amine curing agent;
(ii) barite; and
(iii) mica;

wherein the weight ratio of barite to mica is equal to or greater than about 2.0; and

wherein the dry coating composition further comprises from 0 wt% to about 10 wt% of silica, based on the total solids content of the dry coating composition.

In accordance with a fourth aspect of the present invention there is provided a kit for making a coating composition, wherein the kit comprises:

(i) a resin composition according to the first aspect of the present invention, including any embodiment thereof, and an amine curing agent; or

(ii) a curing agent composition according to the second aspect of the present invention, including any embodiment thereof, and an epoxy resin;

wherein the epoxy resin and the amine curing agent are in separate containers.

In accordance with a fifth aspect of the present invention there is provided a flooring having a dry coating composition according to the third aspect of the present invention, including any embodiment thereof, applied thereon.

In accordance with a sixth aspect of the present invention there is provided a method of making a resin composition of the first aspect of the present invention, including any embodiment thereof, wherein the method comprises mixing a solvent, an epoxy resin, barite, mica, and optionally silica wherein the weight ratio of barite to mica is equal to or greater than about 2.0.

In accordance with a seventh aspect of the present invention there is provided a method of making a curing agent composition of the second aspect of the present invention, including any embodiment thereof, wherein the method comprises mixing a solvent, an amine curing agent, barite, mica, and optionally silica, wherein the weight ratio of barite to mica is equal to or greater than about 2.0.

In accordance with an eighth aspect of the present invention there is provided a method of making a dry coating composition of the third aspect of the present invention, including any embodiment thereof, wherein the method comprises mixing a solvent, an epoxy resin, an amine curing agent, barite, mica, and optionally silica under conditions suitable for the amine curing agent to crosslink the epoxy resin, and drying the mixture to remove the solvent, wherein the weight ratio of barite to mica is equal to or greater than about 2.0. The method may, for example, comprise applying the mixture to a substrate such as a flooring material prior to the drying.

In accordance with a ninth aspect of the present invention there is provided a use of a resin composition of the first aspect of the present invention, including any embodiment thereof, to make a coating composition, wherein the resin composition is mixed with an amine curing agent to crosslink the epoxy resin. The mixture may then be dried to form a dry coating composition, for example the dry coating composition of the third aspect of the present invention.

In accordance with a tenth aspect of the present invention there is provided a use of a curing agent composition of the second aspect of the present invention to make a coating composition, wherein the curing agent composition is mixed with an epoxy resin to crosslink the epoxy resin. The mixture may then be dried to form a dry coating composition, for example the dry coating composition of the third aspect of the present invention.

In accordance with an eleventh aspect of the present invention there is provided a use of a kit of the fourth aspect of the present invention, including any embodiment thereof, to make a coating composition, wherein the epoxy resin, amine curing agent, barite, mica, and optionally silica are mixed such that the amine curing agent crosslinks the epoxy resin. The mixture may then be dried to remove any solvent and form a dry coating composition, for example the dry coating composition of the third aspect of the present invention.

In accordance with a twelfth aspect of the present invention there is provided a use of mica to increase the hot tire resistance of a coating composition. The coating composition may, for example, be the dry coating composition of the third aspect of the present invention, including any embodiment thereof. The coating composition may, for example, be applied to a flooring.

In accordance with a particular embodiment of the present invention, the resin composition is a waterborne composition.

In accordance with a particular embodiment of the present invention, the curing agent composition is a waterborne composition.

In accordance with a particular embodiment of the present invention, the coating composition is a waterborne coating composition.

Certain embodiments of any aspect of the present invention may provide one or more of the following advantages:

- good hot tire resistance;
- good abrasion resistance;
- desired pot life;
- good drying time;
- good application properties;

- desired viscosity;
- good hardness;
- good adhesion;
- good stain resistance;
- good mechanical properties (e.g. flexibility and cracking resistance);
- good vapour permeability.

Embodiments of the invention will be further described in the detailed description. The details, examples and preferences provided in relation to any particular one or more of the stated aspects of the present invention will be further described herein and apply equally to all aspects of the present invention. Any combination of the embodiments, examples and preferences described herein in all possible variations thereof is encompassed by the present invention unless otherwise indicated herein, or otherwise clearly contradicted by context.

**BRIEF DESCRIPTION OF THE FIGURES**

Figure 1 shows the results of the abrasion resistance test described in the examples below.

Figure 2 shows the results of the hardness test described in the examples below.

**DETAILED DESCRIPTION**

There is provided herein coating compositions, in particular coating compositions for application to flooring materials. There is also provided herein compositions suitable for making the coating compositions provided herein. The compositions and coating compositions provided herein may, for example, be dry coating compositions or may, for example, comprise solvent. Where the compositions and coating compositions comprise solvent, the compositions and coating compositions may particularly be waterborne coating compositions.

The coating compositions may be formulated in two component (2K) systems. The two component systems may include a first component that comprises resin (e.g. comprising an epoxy resin) and a second component that comprises curing agent (e.g. comprising an amine curing agent). Upon mixing the first and second components together, the curing agent crosslinks the resin resulting in hardening of the coating composition. Generally the first component and the second component react at room temperature and are therefore mixed together just before they are applied to a substrate (e.g. up to 12 hours before application to a substrate for organic solvent based systems or up to 3 hours or up to 10 minutes before application to a substrate for waterborne systems, depending on the ratio of resin to curing agent and the dilution with solvent, for example water). Therefore, the first component and second components may be sold individually or in kits wherein the first component and second component are in separate containers. The first and/or second components of a two component system may, for example, be waterborne compositions comprising a resin or curing agent respectively (e.g. the resin compositions and curing agent compositions described herein). Other materials such as pigments and fillers may, for example, be incorporated into the first and/or second components. Therefore, there is provided herein compositions, for example waterborne compositions, that can be used in two component systems and kits that can be used to make a coating composition, for example a waterborne coating composition.

As used herein, the term "waterborne" means that water is used as the primary solvent to dissolve or disperse the other components in the composition. The term "primary solvent" means that water is present in a larger amount than any other solvent in the composition. For example, water may comprise at least about 70 wt% of the total solvents, for example at least about 80 wt% or at least about 90 wt% or at least about 95 wt% or at least about 97 wt% or at least about 98 wt% of the total solvents. For example, water may comprise up to about 100 wt% or up to about 99 wt% or up to about 99.5 wt% or up to about 98 wt% or up to about 97 wt% of the total solvents. For example, water may comprise from about 80 wt% to about 100 wt% of the total solvents.

Secondary solvents may be present in addition to water to help water evaporate before hardening of the coating composition, to reduce surface tension of the coating composition, and/or to reduce the minimal temperature of film formation (e.g. to apply the coating at a lower temperature). Other secondary solvents that may be present in addition to water in waterborne compositions include, for example, alcohols, ethers (e.g. glycol ethers), esters, and ester alcohols. Texanol™ is an example of an ester alcohol that may be used as a secondary solvent. Dowanol™ DPH 255, Dowanol™ DPM is a further example of a glycol ether that may be used as a secondary solvent. Dowanol™ DPM contains VOCs whereas Dowanol™ DPH 255 does not. The secondary solvents that may be present in addition to water may, for example, not be volatile organic compounds (VOCs). VOCs are defined as organic compounds having an initial boiling point less than or equal to 250°C measured at standard atmospheric pressure of 101.3 kPa. The total secondary solvents

may comprise up to about 30 wt% or up to about 20 wt% or up to about 10 wt% or up to about 5 wt% or up to about 3 wt% or up to about 2 wt% of the total solvents. For example, the total secondary solvents may comprise from about 0.5 wt% or from about 5 wt% of the total solvents.

Where the compositions described herein (e.g. the resin compositions, curing agent compositions, and coating compositions) are not waterborne compositions, the solvent may be any solvent suitable for making a solution of suspension of the other components of the composition. For example, the solvent may be an organic solvent. The organic solvent may, for example, be selected from alcohols (e.g. polyalcohols), ketones, esters, ethers, and benzene derivatives. Examples of organic solvents are benzyl alcohol, xylene, methyl isobutyl ketone, acetone, methyl ethyl ketone, methoxypropyl acetate, methoxypropanol, phenyl glycidyl ether, butylglycidyl ether, allylglycidyl ether, and glycerol.

The compositions described herein may comprise one or more reactive diluent(s). Reactive diluents are low-molecular-weight, low-viscosity compounds that are used to reduce the viscosity or enhance the solubility of a resin and/or hardener. Examples of reactive diluents for epoxy resins include: phenyl glycidyl ether, butylglycidyl ether, allylglycidyl ether, and glycerol-based epoxy resins. Reactive diluents are low molecular weight monomers, and they have been classified by their acrylate functionality. Molecules containing one acrylate group are classified as monofunctional. Monofunctional monomers are primarily used to reduce viscosity.

Suitable solvents can be selected by a skilled person depending on the nature of the epoxy resin that is used.

A "dry" composition, for example a dry coating composition, is a composition in which solvents (including water) have been removed to leave a solid product (e.g. a solid film). The dry composition may, for example, comprise equal to or less than about 3 wt% solvents, for example equal to or less than about 2 wt% or equal to or less than about 1 wt% solvents. The solvents may, for example, be removed by heating and/or increasing the pressure. The solvents may, for example, be removed by natural drying in a natural environment (i.e. without providing additional means to increase the temperature or pressure). For example, natural drying may take place at atmospheric pressure. For example, natural drying may take place at room temperature (e.g. about 20°C to about 22°C, or in some environments, for example underground garages, about 5°C to about 10°C). Where the coating composition is applied to an external floor (i.e. outdoors) such as a supermarket parking area, the natural drying may take place at higher temperatures such as about 25°C to about 30°C. Thus, natural drying may, for example, take place at a temperature ranging from about 5°C to about 30°C. For example, the solvents may be removed by natural drying.

The present invention is based on the surprising and advantageous finding that coating compositions comprising barite and mica provide improved hot tire resistance compared to coating compositions that do not comprise mica. Further, the compositions comprising barite and mica maintain a number of other important properties such as pot life, drying time, application properties, viscosity, hardness, flexibility, cracking resistance, adhesion, stain resistance, abrasion resistance, and vapour permeability when compared to coating compositions that do not comprise mica. In particular, coating compositions comprising barite and mica provide improved hot tire resistance while maintaining similar pot life, application properties, adhesion, and abrasion resistance compared to coating compositions that do not comprise mica. This is particularly advantageous for waterborne coating compositions since waterborne coating compositions generally provide poorer mechanical properties such as hot tire resistance compared to organic solvent coating compositions.

There is therefore provided herein a resin composition comprising an epoxy resin, barite, and mica, wherein the weight ratio of barite to mica is equal to or greater than about 2.0, and wherein the resin composition further comprises from 0 wt% to about 10 wt% of silica based on the total solids content of the resin composition. The resin composition may, for example, be a waterborne resin composition. The resin composition may, for example, further comprise an amine curing agent. Compositions comprising an epoxy resin and an amine curing agent may be referred to as "coating compositions" herein.

There is also provided herein a curing agent composition comprising an amine curing agent, barite, and mica, wherein the weight ratio of barite to mica is equal to or greater than about 2.0, and wherein the curing agent composition further comprises from 0 wt% to about 10 wt% of silica based on the total solids content of the curing agent composition. The curing agent composition may, for example, be a waterborne curing agent composition. The curing agent composition may, for example, further comprise an epoxy resin. Compositions comprising an epoxy resin and an amine curing agent may be referred to as "coating compositions" herein.

There is also provided herein a dry coating composition comprising an epoxy resin crosslinked with an amine curing agent, wherein the dry coating composition further comprises barite and mica, wherein the weight ratio of barite to mica is equal to or greater than about 2.0, and wherein the dry coating composition further comprises from 0 wt% to about 10 wt% of silica based on the solids content of the dry coating composition. The dry coating composition may, for example, have been obtained from a waterborne coating composition.

There is further provided herein a kit for making a coating composition, wherein the kit comprises a resin composition as described herein and an amine curing agent. Alternatively, the kit comprises a curing agent composition as described herein and an epoxy resin. In the kits described herein, the epoxy resin (in the kit or in the resin composition) and the amine curing agent (in the kit or in the curing agent composition) are kept in separate containers. In certain embodiments, all resins are kept in separate containers to all curing agents. The resin composition and the curing agent

compositions described herein comprise barite and mica having a weight ratio equal to or greater than about 2.0. In certain embodiments, barite and mica may additionally be present in a composition in a separate container to the resin composition or curing agent composition as described herein. In certain embodiments, the total barite and mica in the kits described herein has a weight ratio equal to or greater than about 2.0. In certain embodiments, the kit comprises a resin composition as described herein and a curing agent composition as described herein, wherein the resin composition and curing agent composition are kept in separate containers. In certain embodiments, all components of the kit may be waterborne compositions.

*Resin*

The resin compositions, dry coating compositions, and kits described herein comprise at least one epoxy resin. In certain embodiments, the curing agent compositions described herein may also comprise at least one epoxy resin. For example, the resin compositions, curing agent compositions, dry coating compositions, and kits described herein may comprise one, two, three, four, or five epoxy resins. For example, the resin compositions, curing agent compositions, dry coating compositions, and kits described herein comprise one epoxy resin.

Any epoxy resin(s) suitable for making a coating composition may be used in the resin compositions, curing agent compositions, coating compositions, and kits described herein. In particular, any waterborne epoxy resins suitable for making a waterborne coating composition may be used in the resin compositions, curing agent compositions, coating compositions, and kits described herein. For example, the dry coating compositions described herein may be obtained from or obtainable from a waterborne composition comprising a waterborne epoxy resin. A skilled person would be able to identify epoxy resins that are suitable for use in waterborne compositions.

The resin compositions, curing agent compositions, coating compositions, and kits described herein may, for example, comprise one or more additional non-epoxy resins. The additional resins may, for example, be selected from acrylic resins, alkyd resins, polyester resins, polyurethane resins, polybutadiene resins, and vinyl acetate resins.

In certain embodiments, all resins in the resin compositions, curing agent compositions, coating compositions, and kits described herein are waterborne resins (or obtained from waterborne resins).

In certain embodiments, the only resin(s) present in the resin compositions, curing agent compositions, coating compositions, and kits described herein are epoxy resins, for example waterborne epoxy resins or obtained from waterborne epoxy resins.

In particular, the resin may comprise, consist essentially of, or consist of one or more epoxy resin(s), for example waterborne epoxy resin(s). Epoxy resins are resins that include an epoxide chemical group. Most epoxy monomers are produced by the reaction of a compound with an acidic hydroxyl group (e.g. derived from aliphatic diols, polyols (e.g. polyether polyols), phenolic compounds, or dicarboxylic acids) with epichlorohydrin. Epoxy resins produced from these epoxy monomers may be referred to as glycidyl-based epoxy resins. The nitrogen atom of some amines or amides may also be reacted with epichlorohydrin to produce epoxy monomers. The other production route for epoxy resins is the conversion of aliphatic or cycloaliphatic alkenes with peracids, which require an aliphatic double bond.

Epoxy resins may, for example, be derived from bisphenol or novolak. For example, the epoxy resin may be a bisphenol A based epoxy resin, a bisphenol F based epoxy resin, or a novolak based epoxy resin. Bisphenol A based epoxy resins and bisphenol F based epoxy resins generally have high viscosity, UV sensitivity, good mechanical properties, good chemical resistance, and low flexibility. Bisphenol A based epoxy resins and bisphenol F based epoxy resins are also generally prone to crystallization and it may be necessary to control impurities to reduce crystallization tendancy. Blends of bisphenol A based epoxy resins and bisphenol F based epoxy resins may also be used, for example to reduce crystallization. These epoxy resins may be waterborne epoxy resins.

The epoxy resin may be a liquid epoxy resin (LER) or a solid epoxy resin (SER). In particular, the epoxy resin may be a solid epoxy resin. Solid epoxy resins are suspended in the solvent (e.g. water) and therefore do not require an emulsification step. Liquid epoxy resins may require emulsification, for example with a non-ionic surfactant (e.g. ethoxylates, propoxylates). Liquid epoxy resins may be more sensitive to environmental changes, such as pH and shear force, than solid epoxy resins.

The epoxy resin may, for example, have an epoxy equivalent weight (EEW) equal to or less than about 1000 g/mol. For example, the epoxy resin may have an EEW equal to or less than about 900 g/mol or equal to or less than about 800 g/mol or equal to or less than about 700 g/mol or equal to or less than about 600 g/mol. In particular, the epoxy resin may have an EEW equal to or less than about 500 g/mol or equal to or less than about 450 g/mol or equal to or less than about 400 g/mol or equal to or less than about 350 g/mol or equal to or less than about 300 g/mol. For example, the epoxy resin may have an EEW ranging from about 100 g/mol to about 1000 g/mol or from about 150 g/mol to about 800 g/mol or from about 200 g/mol to about 600 g/mol or from about 300 g/mol to about 600 g/mol or from about 400 g/mol to about 600 g/mol. The epoxy resin may, for example, be a liquid epoxy resin having an EEW ranging from about 150 g/mol to about 250 g/mol. The epoxy resin may, for example, be a type 1 solid epoxy resin having an EEW ranging from about 450 g/mol to about 525 g/mol.

Epoxy equivalent weight (EEW) is defined as the ratio between the molecular weight of the monomer and the number of epoxy groups in the monomer. EEW is expressed in g/mol so, the EEW is the weight of resin containing one epoxy function (in mol). Unless stated otherwise, the EEWs stated herein are based on the solid resin. However, the EEW of the form of delivery (f.o.d.) can be determined based on the wt% of solid epoxy resin in the form of delivery.
For example, the epoxy resin may comprise a bisphenol A based epoxy resin having the following chemical structure.

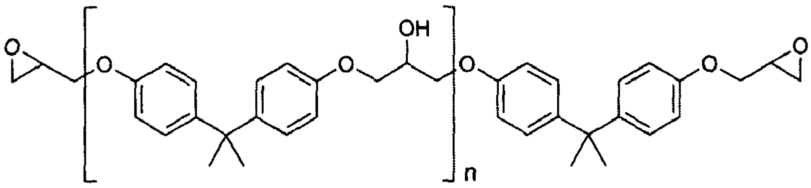

When n is less than 0.3, the epoxy resin is a liquid epoxy resin having a EEW from about 160 to about 225 g/mol. When n ranges from 0.3 to 1.5, the epoxy resin is a semisolid epoxy resin having an EEW ranging from about 230 g/mol to about 240 g/mol. When n is greater than 1.5, the epoxy resin is a type 1 solid epoxy resin having an EEW ranging from about 450 g/mol to about 525 g/mol.
In general, epoxy resins with higher molecular weights have higher flexibility than epoxy resins with lower molecular weights. Solid epoxy resins may be modified to incorporate aliphatic moieties into the epoxy backbone. These modified solid epoxy resins may improve flexibility or reduce viscosity.
An example of a liquid epoxy resin suitable for use in the compositions, coating compositions, and kits described herein is Beckopox™ EP 122 w, which has an epoxy equivalent weight of 190 to 200 g/mol (f.o.d) and is a bisphenol A/F epoxy resin. Another example of a liquid epoxy resin suitable for use in the compositions, coating compositions, and kits described herein is Beckopox™ EP 147 w, which has an epoxy equivalent weight of 188 to 200 g/mol (f.o.d) and is a bisphenol A/F epoxy resin. These epoxy resins may be waterborne epoxy resins.
An example of a solid epoxy resin suitable for use in the compositions, coating compositions, and kits described herein is Beckopox™ EP 2384 w, a type 1 solid epoxy resin having a EEW of 650 - 850 g/mol (f.o.d) and an EEW of 400 - 500 g/mol (solids). This epoxy resin may be waterborne epoxy resins.
The following epoxy resins may be used together with an organic solvent.
Beckopox™ EH 637 is a A-liquid resin having an EEW (f.o.d) of 180 - 190 g/mol. This epoxy resin may, for example, be diluted in methyl ethyl ketone, methoxypropyl acetate, or methoxypropanol. It also has limited dilutability in xylene, methyl isobutyl ketone, and acetone.
Beckopox™ EP 128 is a solvent-free liquid epoxy resin, reactive diluted (non-volatile), having an EEW (f.o.d) of 190 - 200 g/mol. This epoxy resin may, for example, be diluted in methyl ethyl ketone, acetone, xylene, methyl isobutyl ketone, methoxypropyl acetate, or methoxypropanol.

*Curing agent*

The curing agent compositions, dry coating compositions, and kits described herein comprise at least one amine curing agent. In certain embodiments, the resin compositions described herein may also comprise at least one amine curing agent. For example, the resin compositions, curing agent compositions, dry coating compositions, and kits described herein may comprise one, two, three, four, or five amine curing agents. For example, the resin compositions, curing agent compositions, dry coating compositions, and kits described herein comprise one amine curing agent.
Curing agents described herein may sometimes be referred to as hardeners. Any amine curing agent suitable to crosslink the resin may be used in the compositions, coating compositions, and kits described herein. In particular, any amine curing agents suitable to crosslink the resin at room temperature (approximately 20 to 22°C) may be used in the compositions, coating compositions, and kits described herein.
Any amine curing agent(s) suitable for making a coating composition may be used in the resin compositions, curing agent compositions, coating compositions, and kits described herein. In particular, any waterborne amine curing agent suitable for making a coating composition may be used in the resin compositions, curing agent compositions, coating compositions, and kits described herein. For example, the dry coating compositions described herein may be obtained from or obtainable from a waterborne composition comprising a waterborne amine curing agent.
The resin compositions, curing agent compositions, coating compositions, and kits described herein may, for example, comprise one or more additional non-amine curing agents. The additional curing agents may, for example, be selected from anhydride curing agents, phenolic curing agents, and Lewis acid curing agents.
In certain embodiments, all curing agents in the resin compositions, curing agent compositions, coating compositions, and kits described herein are waterborne curing agents (or obtained from waterborne curing agents).

In certain embodiments, the only curing agent(s) present in the resin compositions, curing agent compositions, coating compositions, and kits described herein are amine curing agents, for example waterborne amine curing agents or obtained from waterborne amine curing agents.

In particular, the curing agent may comprise, consist essentially of, or consist of one or more amine curing agents.

Amine curing agents include amines and amine derivatives. The amine curing agent may, for example, be selected from aliphatic amines, cycloaliphatic amines, aromatic amines, polyamidoamines (PAAs), polyamidoamine adducts, phenalkamines, and amine adducts. Examples of aliphatic amines are diethylenetriamine (DTA) and hexamethylenediamine (HMDA). An example of a cycloaliphatic amine is isophorone diamine (IPD). An example of an aromatic amine is diaminodiphenylsulfone (DADS). Examples of polyamidoamines are mono-, di-, and tri-functional fatty acids and polyethylene amines (e.g. ethylenediamine (EDA), diethylenetriamine (DETA), triethylenetramine (TETA), and triethylenepentamine (TEPA)).

Appropriate selection of the curing agent may assist in adjusting the properties of the crosslinked resin in the coating composition such as pot life, curing time, and mechanical properties.

Amine hydrogen equivalent weight (AHEW) is defined as the ratio between the molecular weight of the monomer and the number of NH groups. AHEW is expressed in g/mol so the AHEW is the weight of curing agent containing one hydrogen (in mol).

One epoxy group reacts with one hydrogen amino group (from the curing agent) = 100 % stoichiometry. The following formula is used to determine the proportion of amine curing agent.

$$\frac{100\ g\ of\ resin}{EEW\ (resin)} \times AHEW = x\ g\ of\ hardener\ for\ 100\ g\ of\ resin$$

Examples of amine curing agents that may be used in the compositions, coating compositions, and kits described herein are Beckopox™ EH 623 w, an aliphatic polyamine adduct having a NH equivalent weight (f.o.d) of 200 g/mol and an amine value of 195-220 mg KOH/g; Beckopox™ EH 613 w; and Beckopox™ EH 659 w, a polyamidoamine having a NH equivalent weight (f.o.d) of 210 - 220 g/mol. These curing agents may, for example, be waterborne curing agents.

The following amine curing agents may be used together with an organic solvent. Beckopox™ EP 637 is a cycloaliphatic polyamine adduct with very low viscosity, for use together with liquid epoxy resins, having a NH equivalent weight (f.o.d) of 100 g/mol. Benzyl alcohol may, for example, be used as a solvent.

Beckopox™ EH 629 is an aliphatic polyamine that has a medium viscosity with high reactivity, having a NH equivalent weight (f.o.d) of 70 g/mol.

*Barite*

Without wishing to be bound by theory, it is though that the barite present in the composition helps to control the rheology of the coating composition for application to the substrate. Barite has a low specific surface area and therefore has low binder demand and good wettability. A good filling rate can also be achieved when using barite.

Barite is a mineral comprising barium sulphate ($BaSO_4$). Barite is often found associated with other minerals such as angelsite (lad sulphate), celestine (strontium sulphate) and anhydrite (calcium sulphate).

When the barite is obtained from naturally occurring sources, it may be that some mineral impurities will inevitably contaminate the ground material. In general, however, the barite used in the compositions, coating compositions and kits described herein will contain less than 5% by weight, preferably less than 1% by weight of other mineral impurities.

The barite may, for example, have a $d_{50}$ (laser) equal to or greater than about 0.5 μm. For example, the barite may have a $d_{50}$ (laser) equal to or greater than about 1.0 μm or equal to or greater than about 1.5 μm or equal to or greater than about 2.0 μm or equal to or greater than about 2.5 μm or equal to or greater than about 3.0 μm.

The barite may, for example, have a $d_{50}$ (laser) equal to or less than about 10.0 μm. For example, the barite may have a $d_{50}$ (laser) equal to or less than about 9.0 μm or equal to or less than about 8.0 μm or equal to or less than about 7.0 μm or equal to or less than about 6.0 μm. In particular, the barite may have a $d_{50}$ (laser) equal to or less than about 5.0 μm or equal to or less than about 4.5 μm or equal to or less than about 4.0 μm or equal to or less than about 3.5 μm.

The barite may, for example, have a $d_{50}$ (laser) ranging from about 0.5 μm to about 10.0 μm. For example, the barite may have a $d_{50}$ (laser) ranging from about 0.5 μm to about 8.0 μm or from about 1.0 μm to about 6.0 μm or from about 1.5 μm to about 4.5 μm or from about 2.0 μm to about 4.0 μm.

The barite may, for example, have a $d_{50}$ (sedigraph) equal to or greater than about 0.5 μm. For example, the barite may have a $d_{50}$ (sedigraph) equal to or greater than about 1.0 μm or equal to or greater than about 1.5 μm or equal to or greater than about 2.0 μm or equal to or greater than about 2.5 μm or equal to or greater than about 3.0 μm.

The barite may, for example, have a $d_{50}$ (sedigraph) equal to or less than about 10.0 μm. For example, the barite may have a $d_{50}$ (sedigraph) equal to or less than about 9.0 μm or equal to or less than about 8.0 μm or equal to or less than about 7.0 μm or equal to or less than about 6.0 μm. In particular, the barite may have a $d_{50}$ (sedigraph) equal to or less than about 5.0 μm or equal to or less than about 4.5 μm or equal to or less than about 4.0 μm or equal to or less than about 3.5 μm.

The barite may, for example, have a $d_{50}$ (sedigraph) ranging from about 0.5 μm to about 10.0 μm. For example, the barite may have a $d_{50}$ (sedigraph) ranging from about 0.5 μm to about 8.0 μm or from about 1.0 μm to about 6.0 μm or from about 1.5 μm to about 4.5 μm or from about 2.0 μm to about 4.0 μm.

The barite may, for example, have a $d_{95}$ (sedigraph) equal to or greater than about 5.0 μm. For example, the barite may have a $d_{95}$ (sedigraph) equal to or greater than about 6.0 μm or equal to or greater than about 7.0 μm or equal to or greater than about 8.0 μm or equal to or greater than about 9.0 μm or equal to or greater than about 10.0 μm or equal to or greater than about 11.0 μm or equal to or greater than about 12.0 μm.

The barite may, for example, have a $d_{95}$ (sedigraph) equal to or less than about 50.0 μm. For example, the barite may have a $d_{95}$ (sedigraph) equal to or less than about 45.0 μm or equal to or less than about 40.0 μm or equal to or less than about 35.0 μm or equal to or less than about 30.0 μm. In particular, the barite may have a $d_{95}$ (sedigraph) equal to or less than about 25.0 μm or equal to or less than about 20.0 μm or equal to or less than about 18.0 μm or equal to or less than about 15.0 μm.

The barite may, for example, have a $d_{95}$ (sedigraph) ranging from about 5.0 μm to about 50.0 μm. For example, the barite may have a $d_{95}$ (sedigraph) ranging from about 5.0 μm to about 30.0 μm or from about 5.0 μm to about 20.0 μm or from about 10.0 μm to about 25.0 μm or from about 10.0 μm to about 20.0 μm.

Laser particle size measurements (e.g. $d_{50}$ (laser)) are determined using the Malvern laser light scattering technique. In this technique, the size of particles in powders, suspensions and emulsions may be measured using the diffraction of a laser beam, based on an application of Mie theory. Such a machine, for example a Malvern Mastersizer S (as supplied by Malvern Instruments) provides measurements and a plot of the cumulative percentage by volume of particles having a size, referred to in the art as the 'equivalent spherical diameter' (e.s.d), less than given e.s.d values. The $d_{50}$ is the value determined in this way of the particle e.s.d at which there are 50% by volume of the particles which have an equivalent spherical diameter less than that $d_{50}$.

Sedigraph particle size measurements (e.g. $d_{50}$ (sedigraph), $d_{95}$ (sedigraph)) are as measured in a well-known manner by sedimentation of the particulate material in a fully dispersed condition in an aqueous medium using a Sedigraph 5100 machine as supplied by Micromeritics Instruments Corporation, Norcross, Georgia, USA (www.micromeritics.com), referred to herein as a "Micromeritics Sedigraph 5100 unit", and based on application of Stokes' Law. Such a machine provides measurements and a plot of the cumulative percentage by weight of particles having a size, referred to in the art as the 'equivalent spherical diameter' (e.s.d), less than given e.s.d values. The mean particle size $d_{50}$ (sedigraph) is the value determined in this way of the particle e.s.d at which there are 50% by weight of the particles which have an equivalent spherical diameter less than that $d_{50}$ value. Particle size properties may be determined in accordance with ISO 13317-3, or any method equivalent thereto.

The barite may, for example, have an oil absorption equal to or greater than about 10.0 ml/100g. For example, the barite may have an oil absorption equal to or greater than about 11.0 ml/100g or equal to or greater than about 12.0 ml/100g or equal to or greater than about 13.0 ml/100g or equal to or greater than about 14.0 ml/100g.

The barite may, for example, have an oil absorption equal to or less than about 20.0 ml/100g. For example, the barite may have an oil absorption equal to or less than about 19.0 ml/100g or equal to or less than about 18.0 ml/100g or equal to or less than about 17.0 ml/100g or equal to or less than about 16.0 ml/100g.

The barite may, for example, have an oil absorption ranging from about 10.0 ml/100g to about 20.0 ml/100g or from about 12.0 ml/100g to about 18.0 ml/100g or from about 13.0 ml/100g to about 17.0 ml/100g or from about 14.0 ml/100g to about 16.0 ml/100g.

Oil absorption is measured in accordance with NF EN ISO 787-5.

The barite may, for example, have a BET surface area equal to or greater than about 0.5 $m^2/g$. For example, the barite may have a BET surface area equal to or greater than about 0.75 $m^2/g$ or equal to or greater than about 1.0 $m^2/g$ or equal to or greater than about 1.25 $m^2/g$ or equal to or greater than about 1.5 $m^2/g$.

The barite may, for example, have a BET surface area equal to or less than about 3.0 $m^2/g$. For example, the barite may have a BET surface area equal to or less than about 2.75 $m^2/g$ or equal to or less than about 2.5 $m^2/g$ or equal to or less than about 2.25 $m^2/g$ or equal to or less than about 2.0 $m^2/g$.

The barite may, for example, have a BET surface area ranging from about 0.5 $m^2/g$ to about 3.0 $m^2/g$ or from about 0.75 $m^2/g$ to about 2.75 $m^2/g$ or from about 1.0 $m^2/g$ to about 2.5 $m^2/g$ or from about 1.25 $m^2/g$ to about 2.25 $m^2/g$ or from about 1.5 $m^2/g$ to about 2.0 $m^2/g$.

The BET surface area is the area of the surface of the particles of the mineral with respect to unit mass, determined according to the BET method by the quantity of nitrogen adsorbed on the surface of said particles so to as to form a monomolecular layer completely covering said surface (measurement according to the BET method ISO 9277).

The barite may, for example, have a brightness equal to or greater than about 80 Y. For example the barite may have a brightness equal to or greater than about 82 Y or equal to or greater than about 84 Y or equal to or greater than about 86 Y or equal to or greater than about 88 Y.

The barite may, for example, have a brightness equal to or less than about 95 Y. For example the barite may have a brightness equal to or less than about 94 Y or equal to or less than about 92 Y.

The barite may, for example, have a brightness ranging from about 80 Y to about 95 Y or from about 85 Y to about 95 Y or from about 88 Y to about 92 Y.

Brightness may be measured in accordance with ISO-R457. A Minolta CR300 machine may be used with D65/2°. Brightness Y and the L*a*b* values are taken according to CIE referential.

*Mica*

As shown in the examples below, the inclusion of mica improves the hot tire compositions of coating compositions containing it.

Mica is a group of sheet silicate (phyllosilicate) minerals having the general formula $X_2Y_{4-6}Z_8O_{20}(OH,F)_4$ in which X is K, Na, or Ca or less commonly Ba, Rb, or Cs, Y is Al, Mg, or Fe or less commonly Mn, Cr, Ti, or Li, and Z is Si or Al or less commonly $Fe^{3+}$ or Ti. Common mica has K or Na as X. Brittle mica has Ca as X.

The mica may be classed as dioctahedral (Y is 4) or trioctahedral (Y is 6). An examples of a dioctahedral mica is muscovite. Examples of trioctahedral micas are biotite, lepidolite, phlogopite, and zinnwaldite. In particular, the mica may be muscovite mica.

When the mica is obtained from naturally occurring sources, it may be that some mineral impurities will inevitably contaminate the ground material. In general, however, the mica used in the compositions, coating compositions and kits described herein will contain less than 5% by weight, preferably less than 1% by weight of other mineral impurities.

The mica may, for example, have a $d_{50}$ (laser) equal to or greater than about 10.0 μm. For example, the mica may have a $d_{50}$ (laser) equal to or greater than about 12.0 μm or equal to or greater than about 14.0 μm or equal to or greater than about 15.0 μm or equal to or greater than about 16.0 μm or equal to or greater than about 18.0 μm or equal to or greater than about 20.0 μm.

The mica may, for example, have a $d_{50}$ (laser) equal to or less than about 30.0 μm. For example, the mica may have a $d_{50}$ (laser) equal to or less than about 28.0 μm or equal to or less than about 26.0 μm or equal to or less than about 25.0 μm or equal to or less than about 24.0 μm or equal to or less than about 22.0 μm.

The mica may, for example, have a $d_{50}$ (laser) ranging from about 10.0 μm to about 30.0 μm. For example, the mica may have a $d_{50}$ (laser) ranging from about 12.0 μm to about 28.0 μm or from about 15.0 μm to about 25.0 μm or from about 18.0 μm to about 24.0 μm.

The mica may, for example, have a $d_{50}$ (sedigraph) equal to or greater than about 1.0 μm. For example, the mica may have a $d_{50}$ (sedigraph) equal to or greater than about 1.5 μm or equal to or greater than about 2.0 μm or equal to or greater than about 2.5 μm or equal to or greater than about 3.0 μm or equal to or greater than about 3.5 μm or equal to or greater than about 4.0 μm or equal to or greater than about 4.5 μm or equal to or greater than about 5.0 μm or equal to or greater than about 5.5 μm or equal to or greater than about 6.0 μm.

The mica may, for example, have a $d_{50}$ (sedigraph) equal to or less than about 15.0 μm. For example, the mica may have a $d_{50}$ (sedigraph) equal to or less than about 14.0 μm or equal to or less than about 13.0 μm or equal to or less than about 12.0 μm or equal to or less than about 11.0 μm or equal to or less than about 10.0 μm or equal to or less than about 9.0 μm or equal to or less than about 8.0 μm.

The mica may, for example, have a $d_{50}$ (sedigraph) ranging from about 1.0 μm to about 15.0 μm. For example, the mica may have a $d_{50}$ (sedigraph) ranging from about 2.0 μm to about 14.0 μm or from about 3.0 μm to about 12.0 μm or from about 4.0 μm to about 10.0 μm or from about 5.0 μm to about 8.0 μm.

The mica may, for example, have a $d_{95}$ (sedigraph) equal to or greater than about 10.0 μm. For example, the mica may have a $d_{95}$ (sedigraph) equal to or greater than about 12.0 μm or equal to or greater than about 14.0 μm or equal to or greater than about 15.0 μm or equal to or greater than about 16.0 μm or equal to or greater than about 18.0 μm.

The mica may, for example, have a $d_{95}$ (sedigraph) equal to or less than about 30.0 μm. For example, the mica may have a $d_{95}$ (sedigraph) equal to or less than about 28.0 μm or equal to or less than about 26.0 μm or equal to or less than about 25.0 μm or equal to or less than about 24.0 μm or equal to or less than about 22.0 μm or equal to or less than about 20.0 μm.

The mica may, for example, have a $d_{95}$ (sedigraph) ranging from about 10.0 μm to about 30.0 μm. For example, the mica may have a $d_{95}$ (sedigraph) ranging from about 12.0 μm to about 28.0 μm or from about 15.0 μm to about 25.0 μm or from about 18.0 μm to about 22.0 μm.

Laser and sedigraph particle size measurements are determined according to the methods described above.

The mica may, for example, have an oil absorption equal to or greater than about 60.0 ml/100g. For example, the mica may have an oil absorption equal to or greater than about 65.0 ml/100g or equal to or greater than about 70.0

ml/100g or equal to or greater than about 75.0 ml/100g.

The mica may, for example, have an oil absorption equal to or less than about 100.0 ml/100g. For example, the mica may have an oil absorption equal to or less than about 95.0 ml/100g or equal to or less than about 90.0 ml/100g or equal to or less than about 85.0 ml/100g or equal to or less than about 80.0 ml/100g.

The mica may, for example, have an oil absorption ranging from about 60.0 ml/100g to about 100.0 ml/100g or from about 70.0 ml/100g to about 90.0 ml/100g or from about 75.0 ml/100g to about 85.0 ml/100g.

Oil absorption is measured in accordance with NF EN ISO 787-5.

The mica may, for example, have a BET surface area equal to or greater than about 3.0 $m^2$/g. For example, the mica may have a BET surface area equal to or greater than about 3.5 $m^2$/g or equal to or greater than about 4.0 $m^2$/g or equal to or greater than about 4.5 $m^2$/g or equal to or greater than about 5.0 $m^2$/g.

The mica may, for example, have a BET surface area equal to or less than about 8.0 $m^2$/g. For example, the mica may have a BET surface area equal to or less than about 7.5 $m^2$/g or equal to or less than about 7.0 $m^2$/g or equal to or less than about 6.5 $m^2$/g or equal to or less than about 6.0 $m^2$/g.

The mica may, for example, have a BET surface area ranging from about 3.0 $m^2$/g to about 8.0 $m^2$/g or from about 3.5 $m^2$/g to about 7.5 $m^2$/g or from about 4.0 $m^2$/g to about 7.0 $m^2$/g or from about 4.5 $m^2$/g to about 6.5 $m^2$/g or from about 5.0 $m^2$/g to about 6.0 $m^2$/g.

The BET surface area is the area of the surface of the particles of the mineral with respect to unit mass, determined according to the BET method by the quantity of nitrogen adsorbed on the surface of said particles so to as to form a monomolecular layer completely covering said surface (measurement according to the BET method ISO 9277).

The mica may, for example, have a brightness equal to or greater than about 65 Y. For example the mica may have a brightness equal to or greater than about 68 Y or equal to or greater than about 70 Y or equal to or greater than about 72 Y or equal to or greater than about 74 Y.

The mica may, for example, have a brightness equal to or less than about 85 Y. For example the barite may have a brightness equal to or less than about 82 Y or equal to or less than about 80 Y or equal to or less than about 78 Y.

The barite may, for example, have a brightness ranging from about 65 Y to about 85 Y or from about 70 Y to about 80 Y or from about 72 Y to about 78 Y.

Brightness may be measured in accordance with ISO-R457. A Minolta CR300 machine may be used with D65/2°. Brightness Y and the L*a*b* values are taken according to CIE referential.

*Other Inorganic Particulate Materials*

The compositions, coating compositions, and kits described herein may, for example, further comprise one or more inorganic particulate materials.

The further inorganic particulate material may, for example, be selected from talc, carbon black, an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, perlite, feldspars, nepheline syenite, wollastonite, diatomaceous earth, glass, and natural or synthetic silica or silicates.

The particle size of any additional inorganic particulate materials (e.g. silica and/or titanium dioxide) may be adjusted to be less than the desired dry film thickness of the coating composition.

*Other Pigments*

The compositions, coating compositions, and kits described herein may, for example, further comprise one or more inorganic or organic pigments (inorganic or organic substances that provide a characteristic colour). Pigments may also assist in providing UV protection to the film.

Examples of inorganic pigments are cadmium pigments, chromium pigments, cobalt pigments, copper pigments, iron oxide, lead pigments, manganese pigments, mercury pigments, titanium pigments, zinc pigments, aluminium pigments, carbon pigments, clay earth pigments, and ultramarine pigments.

Some pigments including those containing cadmium, lead, and mercury are considered heavy metals and are often regulated. Many of the effective corrosion inhibitive pigments, such as those based on lead or chromate, are now banned or discouraged due to their toxicity. Zinc phosphate is now the most used pigment for corrosion protection.

Examples of organic pigments are alizarin, azo-pigments, phthalocyanine pigments, and quinacridone pigments.

Examples of inorganic pigments providing a black colour are carbon black, copper carbonate, and manganese dioxide. An example of an organic pigment providing a black colour is aniline black.

Examples of inorganic pigments providing a yellow colour are lead, zinc, and barium chromate, cadmium sulphide, and iron oxides. An example of an organic pigment providing a yellow colour is nickel azo yellow.

Examples of inorganic pigments providing a blue/violet colour are ultramarine, Prussian blue, and cobalt blue. Examples of organic pigments providing a blue/violet colour are phthalocyanin blue, indanthrone blue, and carbazol violet.
Examples of an inorganic pigment providing a green colour is chromium oxide. An example of an organic pigment providing a green colour is phthalocyanin green.
Examples of inorganic pigments providing a red colour are red iron oxide, cadmium selenide, red lead, and chrome red. Examples of organic pigments providing a red colour are toluidine red and quinacridones.
Examples of inorganic pigments providing a white colour are titanium dioxide, zinc oxide, antimony oxide, and lead carbonate.
The maximum particle size of any additional pigment materials (e.g. titanium dioxide) may be adjusted to be less than the desired dry film thickness of the coating composition.

*Titanium Dioxide*

The compositions, coating compositions, and kits described herein may, for example, further comprise titanium dioxide ($TiO_2$). When the titanium dioxide is obtained from naturally occurring sources, it may be that some mineral impurities will inevitably contaminate the ground material. In general, however, the titanium dioxide used in the compositions, coating compositions and kits described herein will contain less than 5% by weight, preferably less than 1% by weight of other mineral impurities.
Titanium dioxide may be included in the compositions, coating compositions, and kits described herein as a white pigment.
The maximum particle size of the titanium dioxide may, for example, be less than the desired thickness of the coating composition.

*Silica*

The compositions, coating compositions, and kits described herein may, for example, further comprise silica ($SiO_2$). When the silica is obtained from naturally occurring sources, it may be that some mineral impurities will inevitably contaminate the ground material. In general, however, the silica used in the compositions, coating compositions and kits described herein will contain less than 5% by weight, preferably less than 1% by weight of other mineral impurities. The silica may, for example, be in the form of quartz.
The silica may, for example, have a $d_{50}$ (laser) equal to or greater than about 2.0 μm. For example, the silica may have a $d_{50}$ (laser) equal to or greater than about 2.5 μm or equal to or greater than about 3.0 μm or equal to or greater than about 3.5 μm or equal to or greater than about 4.0 μm or equal to or greater than about 4.5 μm.
The silica may, for example, have a $d_{50}$ (laser) equal to or less than about 8.0 μm. For example, the silica may have a $d_{50}$ (laser) equal to or less than about 7.5 μm or equal to or less than about 7.0 μm or equal to or less than about 6.5 μm or equal to or less than about 6.0 μm or equal to or less than about 5.5 μm or equal to or less than about 5.0 μm.
The silica may, for example, have a $d_{50}$ (laser) ranging from about 2.0 μm to about 8.0 μm. For example, the silica may have a $d_{50}$ (laser) ranging from about 3.0 μm to about 7.0 μm or from about 4.0 μm to about 6.0 μm or from about 4.5 μm to about 5.5 μm.
The silica may, for example, have a $d_{50}$ (sedigraph) equal to or greater than about 2.0 μm. For example, the silica may have a $d_{50}$ (sedigraph) equal to or greater than about 2.5 μm or equal to or greater than about 3.0 μm or equal to or greater than about 3.5 μm or equal to or greater than about 4.0 μm or equal to or greater than about 4.5 μm.
The silica may, for example, have a $d_{50}$ (sedigraph) equal to or less than about 8.0 μm. For example, the silica may have a $d_{50}$ (sedigraph) equal to or less than about 7.5 μm or equal to or less than about 7.0 μm or equal to or less than about 6.5 μm or equal to or less than about 6.0 μm or equal to or less than about 5.5 μm or equal to or less than about 5.0 μm.
The silica may, for example, have a $d_{50}$ (sedigraph) ranging from about 2.0 μm to about 8.0 μm. For example, the silica may have a $d_{50}$ (sedigraph) ranging from about 3.0 μm to about 7.0 μm or from about 4.0 μm to about 6.0 μm or from about 4.5 μm to about 5.5 μm.
The silica may, for example, have a $d_{95}$ (sedigraph) equal to or greater than about 8.0 μm. For example, the silica may have a $d_{95}$ (sedigraph) equal to or greater than about 9.0 μm or equal to or greater than about 10.0 μm or equal to or greater than about 11.0 μm or equal to or greater than about 12.0 μm.
The silica may, for example, have a $d_{95}$ (sedigraph) equal to or less than about 20.0 μm. For example, the silica may have a $d_{95}$ (sedigraph) equal to or less than about 18.0 μm or equal to or less than about 16.0 μm or equal to or less than about 15.0 μm or equal to or less than about 14.0 μm.
The silica may, for example, have a $d_{95}$ (sedigraph) ranging from about 8.0 μm to about 20.0 μm. For example, the silica may have a $d_{95}$ (sedigraph) ranging from about 10.0 μm to about 15.0 μm or from about 11.0 μm to about 15.0 μm or from about 12.0 μm to about 14.0 μm.

Laser and sedigraph particle size measurements are determined according to the methods described above.

The silica may, for example, have an oil absorption equal to or greater than about 20.0 ml/100g. For example, the silica may have an oil absorption equal to or greater than about 25.0 ml/100g or equal to or greater than about 35.0 ml/100g.

The silica may, for example, have an oil absorption equal to or less than about 60.0 ml/100g. For example, the silica may have an oil absorption equal to or less than about 55.0 ml/100g or equal to or less than about 50.0 ml/100g or equal to or less than about 45.0 ml/100g or equal to or less than about 40.0 ml/100g.

The silica may, for example, have an oil absorption ranging from about 20.0 ml/100g to about 60.0 ml/100g or from about 30.0 ml/100g to about 50.0 ml/100g or from about 35.0 ml/100g to about 45.0 ml/100g.

Oil absorption is measured in accordance with NF EN ISO 787-5.

The silica may, for example, have a BET surface area equal to or greater than about 0.5 $m^2/g$. For example, the silica may have a BET surface area equal to or greater than about 1.0 $m^2/g$ or equal to or greater than about 1.5 $m^2/g$ or equal to or greater than about 2.0 $m^2/g$.

The silica may, for example, have a BET surface area equal to or less than about 4.0 $m^2/g$. For example, the silica may have a BET surface area equal to or less than about 3.5 $m^2/g$ or equal to or less than about 3.0 $m^2/g$ or equal to or less than about 2.5 $m^2/g$.

The silica may, for example, have a BET surface area ranging from about 0.5 $m^2/g$ to about 4.0 $m^2/g$ or from about 1.0 $m^2/g$ to about 3.0 $m^2/g$ or from about 1.5 $m^2/g$ to about 3.0 $m^2/g$ or from about 2.0 $m^2/g$ to about 2.0 $m^2/g$.

The BET surface area is the area of the surface of the particles of the mineral with respect to unit mass, determined according to the BET method by the quantity of nitrogen adsorbed on the surface of said particles so to as to form a monomolecular layer completely covering said surface (measurement according to the BET method ISO 9277).

The silica may, for example, have a brightness equal to or greater than about 70 Y. For example the silica may have a brightness equal to or greater than about 75 Y or equal to or greater than about 80 Y.

The silica may, for example, have a brightness equal to or less than about 95 Y. For example the silica e may have a brightness equal to or less than about 90 Y or equal to or less than about 85 Y.

The silica may, for example, have a brightness ranging from about 70 Y to about 95 Y or from about 75 Y to about 90 Y or from about 80 Y to about 90 Y.

Brightness may be measured in accordance with ISO-R457. A Minolta CR300 machine may be used with D65/2°. Brightness Y and the L*a*b* values are taken according to CIE referential.

Silica may be included in the compositions, coating compositions, and kits described herein to improve abrasion resistance or hardness of the coating compositions. However, silica is added to the composition in an amount no more than about 10 wt% based on the total solids content of the composition since it may degrade the hot tire resistance of the composition.

*Other Additives*

The compositions, coating compositions, and kits described herein may, for example, comprise one or more further additives.

Examples of further additives that may be used in the compositions, coating compositions, and kits described herein are dispersing agents (e.g. polymeric non-ionic dispersing agents), defoaming agents (e.g. silicon and/or silicon-free defoaming agents), flow agents, and wetting agents.

Each additive may be present in the composition, coating composition, or kit in an amount ranging from about 0.01 wt% to about 10.0 wt%, for example from about 0.05 wt% to about 8.0 wt% or from about 0.1 wt% to about 6.0 wt% or from about 0.5 wt% to about 5.0 wt% or from about 1.0 wt% to about 3.0 wt%, based on the total solids content of the composition, coating composition, or kit.

The total amount of other additives present in the composition, coating composition, or kit described herein may, for example, range from about 0.01 w% to about 20.0 wt%, for example from about 0.05 wt% to about 15.0 wt% or from about 0.1 wt% to about 10.0 wt% or from about 0.5 wt% to about 8.0 wt% or from about 1.0 wt% to about 5.0 wt% or from about 1.0 wt% to about 3.0 wt%, based on the total solids content of the composition, coating composition, or kit.

*Quantities and Proportions*

The following quantities and proportions may apply to the resin compositions, curing agent compositions, coating compositions (e.g. dry coating compositions), and kits described herein. The quantities and proportions described throughout that are applicable to the kits are applicable to the total chemical components of the kits for forming part of a coating composition and do not apply to the containers or any other packing or extra material included in the kits that do not form part of a coating composition.

The weight ratio of barite to mica is equal to or greater than about 2.0.

The weight ratio of barite to mica may, for example, be equal to or greater than about 2.1 or equal to or greater than about 2.2 or equal to or greater than about 2.3.

The weight ratio of barite to mica may, for example, be equal to or less than about 5.0 or equal to or less than about 4.5 or equal to or less than about 4.0 or equal to or less than about 3.5 or equal to or less than about 3.0 or equal to or less than about 2.5.

The weight ratio of barite to mica may, for example, range from about 2.0 to about 5.0 or from about 2.0 to about 3.0 or from about 2.0 to about 2.5.

The weight ratio of epoxy resin to barite may, for example, be equal to or greater than about 1.0. For example, the weight ratio of epoxy resin to barite may be equal to or greater than about 1.5 or equal to or greater than about 2.0 or equal to or greater than about 2.5.

The weight ratio of epoxy resin to barite may, for example, be equal to or less than about 5.0. For example, the weight ratio of epoxy resin to barite may be equal to or less than about 4.5 or equal to or less than about 4.0 or equal to or less than about 3.5 or equal to or less than about 3.0.

The weight ratio of epoxy resin to barite may, for example, range from about 1.0 to about 5.0 or from about 2.0 to about 4.0 or from about 2.5 to about 3.5.

The weight ratio of epoxy resin to mica may, for example, be equal to or greater than about 2.0. For example, the weight ratio of epoxy resin to mica maybe equal to or greater than about 3.0 or equal to or greater than about 4.0 or equal to or greater than about 5.0 or equal to or greater than about 6.0.

The weight ratio of epoxy resin to mica may, for example, be equal to or less than about 10.0. For example, the weight ratio of epoxy resin to mica may be equal to or less than about 9.0 or equal to or less than about 8.0 or equal to or less than about 7.0.

The weight ratio of epoxy resin to mica may, for example, range from about 2.0 to about 10.0 or from about 3.0 to about 9.0 or from about 4.0 to about 8.0 or from about 5.0 to about 7.0.

The weight ratio of amine curing agent to barite may, for example, be equal to or greater than about 0.5. For example, the weight ratio of amine curing agent to barite may be equal to or greater than about 0.75 or equal to or greater than about 1.0.

The weight ratio of amine curing agent to barite may, for example, be equal to or less than about 2.0. For example, the weight ratio of amine curing agent to barite may be equal to or less than about 1.75 or equal to or less than about 1.5 or equal to or less than about 1.25.

For example, the weight ratio of amine curing agent to barite may be from about 0.5 to about 2.0 or from about 0.75 to about 1.75 or from about 1.0 to about 1.5.

The weight ratio of amine curing agent to mica may, for example, be equal to or greater than about 1.0. For example, the weight ratio of amine curing agent to mica may be equal to or greater than about 1.5 or equal to or greater than about 2.0.

The weight ratio of amine curing agent to mica may, for example, be equal to or less than about 4.0. For example, the weight ratio of amine curing agent to mica may be equal to or less than about 3.5 or equal to or less than about 3.0 or equal to or less than about 2.5.

For example, the weight ratio of amine curing agent to mica may be from about 1.0 to about 4.0 or from about 1.5 to about 3.5 or from about 2.0 to about 3.0.

The weight ratio of epoxy resin to titanium dioxide may, for example, be equal to or greater than about 1.0. For example, the weight ratio of epoxy resin to titanium dioxide may be equal to or greater than about 1.5 or equal to or greater than about 2.0.

The weight ratio of epoxy resin to titanium dioxide may, for example, be equal to or less than about 4.0. For example, the weight ratio of epoxy resin to titanium dioxide may be equal to or less than about 3.5 or equal to or less than about 3.0 or equal to or less than about 2.5.

The weight ratio of epoxy resin to titanium dioxide may, for example, range from about 1.0 to about 4.0 or from about 1.5 to about 3.5 or from about 1.5 to about 3.0 or from about 1.5 to about 2.5.

The weight ratio of amine curing agent to titanium dioxide may, for example, be equal to or greater than about 1.0. For example, the weight ratio of amine curing agent to titanium dioxide may be equal to or greater than about 1.5 or equal to or greater than about 2.0.

The weight ratio of amine curing agent to titanium dioxide may, for example, be equal to or less than about 4.0. For example, the weight ratio of amine curing agent to titanium dioxide may be equal to or less than about 3.5 or equal to or less than about 3.0 or equal to or less than about 2.5.

The weight ratio of amine curing agent to titanium dioxide may, for example, range from about 1.0 to about 4.0 or from about 1.5 to about 3.5 or from about 1.5 to about 3.0 or from about 1.5 to about 2.5.

The weight ratio of barite to titanium dioxide may, for example, be equal to or greater than about 0.2. For example, the weight ratio of barite to titanium dioxide may be equal to or greater than about 0.4 or equal to or greater

than about 0.5.

The weight ratio of barite to titanium dioxide may, for example, be equal to or less than about 1.0. For example, the weight ratio of barite to titanium dioxide may be equal to or less than about 0.8 or equal to or less than about 0.6.

The weight ratio of barite to titanium dioxide may, for example, range from about 0.2 to about 1.0 or from about 0.4 to about 0.8.

The weight ratio of mica to titanium dioxide may, for example, be equal to or greater than about 0.1. For example, the weight ratio of mica to titanium dioxide may be equal to or greater than about 0.2 or equal to or greater than about 0.25.

The weight ratio of mica to titanium dioxide may, for example, be equal to or less than about 0.5. For example, the weight ratio of mica to titanium dioxide may be equal to or less than about 0.4 or equal to or less than about 0.3.

The weight ratio of mica to titanium dioxide may, for example, range from about 0.1 to about 0.5 or from about 0.2 to about 0.4.

The weight ratio of epoxy resin to silica may, for example, be equal to or greater than about 2.0. For example, the weight ratio of epoxy resin to silica may be equal to or greater than about 2.5 or equal to or greater than about 3.0 or equal to or greater than about 3.5.

The weight ratio of epoxy resin to silica may, for example, be equal to or less than about 6.0. For example, the weight ratio of epoxy resin to silica may be equal to or less than about 5.5 or equal to or less than about 5.0 or equal to or less than about 4.5 or equal to or less than about 4.0.

The weight ratio of epoxy resin to silica may, for example, range from about 2.0 to about 6.0 or from about 2.5 to about 5.5 or from about 3.0 to about 5.0 or from about 3.5 to about 4.5.

The weight ratio of amine curing agent to silica may, for example, be equal to or greater than about 0.2. For example, the weight ratio of amine curing agent to silica may be equal to or greater than about 0.3 or equal to or greater than about 0.4 or equal to or greater than about 0.5.

The weight ratio of amine curing agent to silica may, for example, be equal to or less than about 2.0. For example, the weight ratio of amine curing agent to silica may be equal to or less than about 1.75 or equal to or less than about 1.5 or equal to or less than about 1.25.

For example, the weight ratio of amine curing agent to silica may range from about 0.2 to about 2.0 or from about 0.4 to about 1.5 or from about 0.5 to about 1.25.

The weight ratio of barite to silica may, for example, be equal to or greater than about 0.5. For example, the weight ratio of barite to silica may be equal to or greater than about 1.0.

The weight ratio of barite to silica may, for example, be equal to or less than about 2.0. For example, the weight ratio of barite to silica may be equal to or less than about 1.5.

The weight ratio of barite to silica may, for example, range from about 0.5 to about 2.0 or from about 1.0 to about 1.5.

The weight ratio of mica to silica may, for example, be equal to or greater than about 0.25. For example, the weight ratio of mica to silica may be equal to or greater than about 0.5.

The weight ratio of mica to silica may, for example, be equal to or less than about 1.0. For example, the weight ratio of mica to silica may be equal to or less than about 0.5.

The weight ratio of mica to silica may, for example, range from about 0.25 to about 1.0 or from about 0.5 to about 1.0.

The weight ratio of epoxy resin to amine curing agent may, for example, be equal to or greater than about 1.0. For example, the weight ratio of epoxy resin to amine curing agent may be equal to or greater than about 1.5 or equal to or greater than about 2.0 or equal to or greater than about 2.5 or equal to or greater than about 3.0 or equal to or greater than about 3.5 or equal to or greater than about 4.0.

The weight ratio of epoxy resin to amine curing agent may, for example, be equal to or less than about 8.0. For example, the weight ratio of epoxy resin to amine curing agent may be equal to or less than about 7.5 or equal to or less than about 7.0 or equal to or less than about 6.5 or equal to or less than about 6.0 or equal to or less than about 5.5 or equal to or less than about 5.0.

The weight ratio of epoxy resin to amine curing agent may, for example range from about 1.0 to about 8.0 or from about 2.0 to about 6.0 or from about 3.0 to about 5.0.

The weight ratio of epoxy resin to total inorganic particulate material may, for example, be equal to or greater than about 0.5. For example, the weight ratio of epoxy resin to total inorganic particulate material may be equal to or greater than about 1.0.

The weight ratio of epoxy resin to total inorganic particulate material may, for example, be equal to or less than about 2.0. For example, the weight ratio of epoxy resin to total inorganic particulate material may be equal to or less than about 1.5.

The weight ratio of epoxy resin to total inorganic particulate material may range from about 0.5 to about 2.0 or from about 1.0 to about 1.5.

The weight ratio of amine curing agent to total inorganic particulate material may, for example, be equal to or

greater than about 0.1. For example, the weight ratio of amine curing agent to total inorganic particulate material may be equal to or greater than about 0.2 or equal to or greater than about 0.3.

The weight ratio of amine curing agent to total inorganic particulate material may, for example, be equal to or less than about 0.75. For example, the weight ratio of amine curing agent to total inorganic particulate material may be equal to or less than about 0.5.

The weight ratio of amine curing agent to total inorganic particulate material may range from about 0.1 to about 0.75 or from about 0.2 to about 0.5.

For example, the resin compositions, coating compositions, and kits described herein may have:

a weight ratio of barite to mica ranging from about 2.0 to about 5.0; and
a weight ratio of epoxy resin to barite ranging from about 1.0 to about 5.0; and
a weight ratio of epoxy resin to mica ranging from about 2.0 to about 10.0.

For example, the resin compositions, coating compositions, and kits described herein may have:

a weight ratio of barite to mica ranging from about 2.0 to about 4.0; and
a weight ratio of epoxy resin to barite ranging from about 2.0 to about 5.0; and
a weight ratio of epoxy resin to mica ranging from about 4.0 to about 10.0.

For example, the resin compositions, coating compositions, and kits described herein may have:

a weight ratio of barite to mica ranging from about 2.0 to about 3.5; and
a weight ratio of epoxy resin to barite ranging from about 2.0 to about 4.0; and
a weight ratio of epoxy resin to mica ranging from about 4.0 to about 8.0.

For example, the resin compositions, coating compositions, and kits described herein may have:

a weight ratio of barite to mica ranging from about 2.0 to about 5.0; and
a weight ratio of epoxy resin to barite ranging from about 1.0 to about 5.0; and
a weight ratio of epoxy resin to mica ranging from about 2.0 to about 10.0; and
a weight ratio of epoxy resin to titanium dioxide ranging from about 1.0 to about 4.0.

For example, the resin compositions, coating compositions, and kits described herein may have:

a weight ratio of barite to mica ranging from about 2.0 to about 4.0; and
a weight ratio of epoxy resin to barite ranging from about 2.0 to about 5.0; and
a weight ratio of epoxy resin to mica ranging from about 4.0 to about 10.0; and
a weight ratio of epoxy resin to titanium dioxide ranging from about 1.0 to about 3.0.

For example, the resin compositions, coating compositions, and kits described herein may have:

a weight ratio of barite to mica ranging from about 2.0 to about 3.5; and
a weight ratio of resin to barite ranging from about 2.0 to about 4.0; and
a weight ratio of resin to mica ranging from about 4.0 to about 8.0; and
a weight ratio of resin to titanium dioxide ranging from about 1.0 to about 3.0.

The stoichiometric ratio of epoxy resin to amine curing agent may, for example, be equal to or greater than about 0.7. For example, the stoichiometric ratio of epoxy resin to amine curing agent may be equal to or greater than about 0.8 or equal to or greater than about 0.9 or equal to or greater than about 1.0.

The stoichiometric ratio of epoxy resin to amine curing agent may, for example, be equal to or less than about 1.7. For example, the stoichiometric ratio of epoxy resin to amine curing agent may be equal to or less than about 1.6 or equal to or less than about 1.5 or equal to or less than about 1.4 or equal to or less than about 1.3 or equal to or less than about 1.2 or equal to or less than about 1.1.

The stoichiometric ratio of epoxy resin to amine curing agent may, for example, range from about 0.7 to about 1.7 or from about 0.8 to about 1.5 or from about 0.9 to about 1.4 or from about 1.0 to about 1.3 or from about 1.0 to about 1.2 or from about 1.0 to about 1.1.

The stoichiometric ratio of epoxy groups in the resin to NH groups in the curing agent may, for example, be equal to or greater than about 0.7. For example, the stoichiometric ratio of epoxy groups to NH groups may be equal to

or greater than about 0.8 or equal to or greater than about 0.9 or equal to or greater than about 1.0.

The stoichiometric ratio of epoxy groups in the resin to NH groups in the curing agent may, for example, be equal to or less than about 1.7. For example, the stoichiometric ratio of epoxy groups to NH groups may be equal to or less than about 1.6 or equal to or less than about 1.5 or equal to or less than about 1.4 or equal to or less than about 1.3 or equal to or less than about 1.2 or equal to or less than about 1.1.

The stoichiometric ratio of epoxy groups in the resin to NH groups in the curing agent may, for example, range from about 0.7 to about 1.7 or from about 0.8 to about 1.5 or from about 0.9 to about 1.4 or from about 1.0 to about 1.3 or from about 1.0 to about 1.2 or from about 1.0 to about 1.1.

In excess, the curing agent may have detrimental effects on chemical resistance and/or corrosion resistance. Having the resin in excess may, for example, be preferable to lengthen the pot-life of the coating composition comprising resin and curing agent. However, the hardness of the film may be detrimentally affected by having too high an excess of resin.

The following wt% ranges are based on the total solids content of the resin compositions, curing agent compositions, coating compositions, or coating components of the kits.

The resin composition, curing agent composition, coating composition, or kits described herein may comprise equal to or greater than about 20 wt% of epoxy resin. For example, the resin composition, curing agent composition, coating composition, or kit may comprise equal to or greater than about 25 wt% or equal to or greater than about 30 wt% or equal to or greater than about 35 wt% or equal to or greater than about 40 wt% of epoxy resin.

The resin composition, curing agent composition, coating composition, or kits described herein may comprise equal to or less than about 60 wt% of epoxy resin. For example, the resin composition, curing agent composition, coating composition, or kit may comprise equal to or less than about 55 wt% or equal to or less than about 50 wt% or equal to or less than about 45 wt% of epoxy resin.

For example, the resin composition, curing agent composition, coating composition, or kit may comprise from about 20 wt% to about 60 wt% or from about 30 wt% to about 60 wt% or from about 30 wt% to about 55 wt% or from about 35 wt% to about 50 wt% or from about 35 wt% to about 45 wt% of epoxy resin.

The resin composition, curing agent composition, coating composition, or kits described herein may comprise equal to or greater than about 5 wt% of the amine curing agent. For example, the resin composition, curing agent composition, coating composition, or kits described herein may comprise equal to or greater than about 6 wt% or equal to or greater than about 8 wt% or equal to or greater than about 10 wt% of the amine curing agent.

The resin composition, curing agent composition, coating composition, or kits described herein may comprise equal to or less than about 20 wt% of the amine curing agent. For example, the resin composition, curing agent composition, coating composition, or kits described herein may comprise equal to or less than about 18 wt% or equal to or greater than about 16 wt% or equal to or greater than about 15 wt% of the amine curing agent.

For example, the resin composition, curing agent composition, coating composition, or kits described herein may comprise from about 5 wt% to about 20 wt% or from about 8 wt% to about 18 wt% or from about 10 wt% to about 15 wt% of the amine curing agent.

The resin composition, curing agent composition, coating composition, or kits described herein may comprise equal to or greater than about 10 wt% of barite. For example, the resin composition, curing agent composition, coating composition, or kit may comprise equal to or greater than about 12 wt% or equal to or greater than about 14 wt% or equal to or greater than about 15 wt% of barite.

The resin composition, curing agent composition, coating composition, or kits described herein may comprise equal to or less than about 30 wt% of barite. For example, the resin composition, curing agent composition, coating composition, or kit may comprise equal to or less than about 28 wt% or equal to or less than about 26 wt% or equal to or less than about 25 wt% or equal to or less than about 24 wt% or equal to or less than about 22 wt% or equal to or less than about 20 wt% or equal to or less than about 18 wt% or equal to or less than about 16 wt% of barite.

For example, the composition, coating composition, or kit may comprise from about 10 wt% to about 30 wt% or from about 10 wt% to about 20 wt% or from about 10 wt% to about 15 wt% of barite.

The resin composition, curing agent composition, coating composition, or kits described herein may comprise equal to or greater than about 5 wt% of mica. For example, the resin composition, curing agent composition, coating composition, or kit may comprise equal to or greater than about 6 wt% or equal to or greater than about 7 wt% or equal to or greater than about 7.5 wt% of mica.

The resin composition, curing agent composition, coating composition, or kits described herein may comprise equal to or less than about 15 wt% of mica. For example, the resin composition, curing agent composition, coating composition, or kit may comprise equal to or less than about 14 wt% or equal to or less than about 13 wt% or equal to or less than about 12.5 wt% or equal to or less than about 12 wt% or equal to or less than about 11 wt% or equal to or less than about 10 wt% or equal to or less than about 9 wt% or equal to or less than about 8 wt% of mica.

For example, the resin composition, curing agent composition, coating composition, or kit may comprise from about 5 wt% to about 15 wt% or from about 5 wt% to about 10 wt% or from about 5 wt% to about 7.5 wt% of mica.

The resin composition, curing agent composition, coating composition, or kits described herein may comprise equal to or greater than about 20 wt% total inorganic particulate material. For example, the resin composition, curing agent composition, coating composition, or kit may comprise equal to or greater than about 25 wt% or equal to or greater than about 30 wt% or equal to or greater than about 35 wt% total inorganic particulate material.

The resin composition, curing agent composition, coating composition, or kits described herein may comprise equal to or less than about 60 wt% of total inorganic particulate material. For example, the resin composition, curing agent composition, coating composition, or kit may comprise equal to or less than about 55 wt% or equal to or less than about 50 wt% or equal to or less than about 45 wt% or equal to or less than about 40 wt% of total inorganic particulate material.

For example, the resin composition, curing agent composition, coating composition, or kit may comprise from about 30 wt% to about 70 wt% or from about 40 wt% to about 60 wt% or from about 45 wt% to about 55 wt% total inorganic particulate material.

The resin composition, curing agent composition, coating composition, or kits described herein may comprise equal to or greater than about 5 wt% of titanium dioxide. For example, the resin composition, curing agent composition, coating composition, or kit may comprise equal to or greater than about 10 wt% or equal to or greater than about 15 wt% or equal to or greater than about 20 wt% of titanium dioxide.

The resin composition, curing agent composition, coating composition, or kits described herein may comprise equal to or less than about 40 wt% of titanium dioxide. For example, the resin composition, curing agent composition, coating composition, or kit may comprise equal to or less than about 35 wt% or equal to or less than about 30 wt% or equal to or less than about 25 wt% of titanium dioxide.

For example, the resin composition, curing agent composition, coating composition, or kit may comprise from about 5 wt% to about 40 wt% or from about 5 wt% to about 30 wt% or from about 10 wt% to about 30 wt% or from about 15 wt% to about 25 wt% of titanium dioxide.

The resin composition, curing agent composition, coating composition, or kits described herein may comprise equal to or greater than about 0.5 wt% of silica. For example, the resin composition, curing agent composition, coating composition, or kit may comprise equal to or greater than about 1 wt% or equal to or greater than about 2 wt% or equal to or greater than about 4 wt% or equal to or greater than about 5 wt% of silica.

The resin composition, curing agent composition, coating composition, or kits described herein may comprise equal to or less than about 10 wt% of silica. For example, the resin composition, curing agent composition, coating composition, or kit may comprise equal to or less than about 8 wt% or equal to or less than about 6 wt% of silica.

For example, the resin composition, curing agent composition, coating composition, or kit may comprise from about 0.5 wt% to about 10 wt% or from about 1 wt% to about 8 wt% or from about 2 wt% to about 6 wt% of silica.

*Properties of the Compositions and Coating Compositions*

The resin compositions, curing agent compositions, coating compositions, and kits described herein may, for example, have a pigment volume concentration (PVC) equal to or greater than about 10 %. The PVC of a kit refers to the PVC of the composition formed when all components of the kit are mixed together. For example, the resin compositions, curing agent compositions, coating compositions, and kits described herein may have a PVC equal to or greater than about 15 % or equal to or greater than about 20 % or equal to or greater than about 25 %.

The resin compositions, curing agent compositions, coating compositions, and kits described herein may, for example, have a pigment volume concentration (PVC) equal to or less than about 50 %. The PVC of a kit refers to the PVC of the composition formed when all components of the kit are mixed together. For example, the resin compositions, curing agent compositions, coating compositions, and kits described herein may have a PVC equal to or less than about 45 % or equal to or less than about 40 % or equal to or less than about 35 %.

The resin compositions, curing agent compositions, coating compositions, and kits described herein may, for example, have a PVC ranging from about 10 % to about 50 % or from about 15 % to about 45 % or from about 20 % to about 40 % or from about 25 % to about 35 %.

The pigment volume concentration (PVC) is defined as the total volume of fillers (including barite, mica, pigments, and other inorganic particulate material) divided by the total volume of solid components (including epoxy resin and amine curing agent) multiplied by 100.

The resin compositions, curing agent compositions, coating compositions, and kits described herein may, for example, have a critical pigment volume concentration (CPVC) equal to or greater than about 40 %. For example, the resin compositions, curing agent compositions, coating compositions, and kits described herein may have a CPVC equal to or greater than about 45 % or equal to or greater than about 50 %.

The resin compositions, curing agent compositions, coating compositions, and kits described herein may, for example, have a critical pigment volume concentration (CPVC) equal to or less than about 60 %. For example, the resin compositions, curing agent compositions, coating compositions, and kits described herein may have a CPVC equal to

or less than about 55 % or equal to or less than about 50 %.

The resin compositions, curing agent compositions, coating compositions, and kits described herein may, for example, have a CPVC ranging from about 40 % to about 60 % or from about 45 % to about 55 %.

Critical pigment volume concentration (CPVC) is defined as the volumetric point at which there is precisely enough binder to fill all the voids between the filler particles. CPVC is determined using the following formula.

$$CPVC = \frac{Volume\ of\ pigments\ (incl.\ fillers)}{Volume\ of\ pigments\ (incl.\ fillers) + Volume\ of\ linseed\ oil}$$

where the volume of linseed oil is

$$Volume\ of\ linseed\ oil = \frac{Weight\ of\ linseed\ oil}{0,935}$$

where 0.935 is the density of linseed oil.

The resin compositions, curing agent compositions, coating compositions, and kits described herein may, for example, have a ratio of PVC to CPVC equal to or greater than about 0.3, for example equal to or greater than about 0.35 or equal to or greater than about 0.4 or equal to or greater than about 0.45. The resin compositions, curing agent compositions, coating compositions, and kits described herein may, for example, have a ratio of PVC to CPVC equal to or less than about 0.7, for example equal to or greater than about 0.65 or equal to or less than about 0.6 or equal to or less than about 0.55. For example, the resin compositions, curing agent compositions, coating compositions, and kits described herein may have a ratio of PVC to CPVC ranging from about 0.3 to about 0.7 or from about 0.4 to about 0.6 or from about 0.45 to about 0.55.

The compositions described herein comprising resin and a curing agent may, for example, have a pot life ranging from about 10 minutes to about 12 hours. For example, the compositions described herein may have a pot life ranging from about 0 minutes to about 5 hours or from about 1 hour to about 3 hours or from about 2 hours to about 3 hours. For example, for organic solvent-based compositions, the pot life may, for example, range from about 10 minutes to about 12 hours. For example, for water-based compositions, the pot life may range from about 10 minutes to about 4 hours.

Pot life may be measured according to ISO 9514 (Determination of the pot life of multicomponent coating systems. To determine the pot-life of a two-component system, the gloss level and viscosity (flow) are measured over time. It is also possible to measure hardness of the film (e.g. Persoz hardness). Where a change in gloss, viscosity and hardness is observed, the coating composition has reached the end of its pot life. In organic solvent based systems, the pot life may be the time required for the viscosity of the composition to double.

The coating compositions described herein comprising epoxy resin and amine curing agent may, for example, have a flow time ranging from about 25 seconds to about 120 seconds, for example from about 30 seconds to about 100 seconds or from about 40 seconds to about 80 seconds.

Flow time and viscosity may be measured according to ASTM D1200 & ISO 2431 (Determination of flow time using flow cups). A cup FORD 4 can be used to measure the flow time (where the expected flow time range is 30 to 100 seconds or a viscosity range between 70 and 370 cSt).

Other application properties such as levelling and drying time, the pot life of the coating composition, and the chemical resistance of the coating may, for example, be influenced by the particular solvents used.

*Substrates*

The compositions and kits described herein may be used to make coating compositions comprising epoxy resin crosslinked with amine curing agent, barite, and mica.

The coating compositions described herein may be applied to any suitable substrate. In particular, the coating compositions described herein may be applied to flooring materials. Thus, there is also provided herein a substrate, for example a flooring material, have a coating composition as described herein applied thereon.

For example, the coating compositions may be applied to cement, concrete, fibreboard, plasterboard, or steel.

The coating compositions described herein may, for example, be applied to any floors exposed to high traffic (e.g. pedestrian, forklift trucks, cars etc.) Industrial applications of the floor coating compositions described herein include, for example plants/factories (e.g. food plants, processing plants), warehouses, parking areas (e.g. underground and/or supermarket), or shops (e.g. interior floors). Retail applications include, for example, garage floors (e.g. domestic garage floors).

A primer may, for example, be applied to the substrate before the coating composition as described herein is applied. The primer may penetrate into the concrete and seal the pores to reinforce the substrate and ensure good adhesion between the topcoat and the substrate.

The coating compositions may, for example, be applied to the substrate in one, two, or more coats. For example, the coating compositions may be applied to the substrate in up to five coats, particularly one or two coats.

Each coat may, for example, be at least about 30 μm thick. For example, each coat may be at least about 40 μm or at least about 50 μm thick. Each coat may, for example, be up to about 300 μm thick. For example, each coat may be up to about 250 μm or up to about 200 μm or up to about 150 μm or up to about 100 μm thick. For example, each coat may be from about 30 μm to about 300 μm or from about 40 μm to about 250 μm or from about 50 μm to about 200 μm or from about 50 μm to about 100 μm thick. In particular, the coating composition may be applied in two coats to provide a total dry film thickness of about 100 μm to about 120 μm. Thickness refers to dry film thickness and is measured by Byko-Test 7500 (according to ISO 2808).

A transparent topcoat may, for example, be applied to the coating compositions described herein to provide improved gloss level or to optimize other properties such as UV-light exposure resistance.

*Uses*

The present invention is based, at least in part, on the surprising finding that the addition of mica to a coating composition improves the hot tire resistance of the coating composition.

Therefore, there is further provided herein the use of mica to increase the hot tire resistance of a coating composition. The mica may, for example, be used by incorporating it into a composition, kit, or coating composition as described herein, including any embodiment thereof. The mica may, for example, have any of the properties described above.

There is also provided herein the use of a composition as described herein to make a coating composition, wherein the composition is mixed with a curing agent to crosslink the resin in the composition. The composition may, for example, be a waterborne composition and/or be suitable to form a waterborne coating composition. The coating composition may be applied to any suitable substrate, for example a flooring material, for example in at least one, two, or more coats as described above.

There is also provided herein the use of a kit as described herein to make a coating composition, wherein the resin in the kit is mixed with the curing agent in the kit to crosslink the resin and form a coating composition. The components of the kit may, for example, be waterborne compositions and/or form a waterborne coating composition. The coating composition may be applied to any suitable substrate, for example a flooring material, for example in at least one, two, or more coats as described above.

After the resin (e.g. resin in the waterborne composition or kit) and curing agent are mixed together to form a coating composition, the coating composition may be further diluted by mixing with additional solvent, for example additional water. This may be to achieve a desired viscosity prior to application to a substrate.

After the resin (e.g. resin in the composition or kit) and curing agent are mixed together to form a coating composition, the coating composition should be applied to the substrate before the end of its pot-life. In some embodiments, an induction time is required to allow for the crosslinking reaction to start before the coating composition is applied to the substrate.

The end of the pot life of the coating composition comprising resin and curing agent may not be detectable from an increase in viscosity or gelation. In this case, it is essential to determine the pot life of the coating composition (usually provided by the manufacturer) and apply the coating composition to the substrate within this time.

In some cases, an induction time is needed to start the crosslinking reaction between the resin and curing agent. Lots of defects (e.g. pinholes, cracks) in the applied film may indicate that an induction time is required.

Additional solvent (e.g. water), for example to adjust the viscosity of the coating composition, or addition of other compounds with hydroxyl groups, may accelerate the crosslinking reaction of the resin and curing agent. This may shorten the pot life and/or increase the brittleness of films and/or interfere with the adhesion of the coating to the substrate.

In general, the coating composition has a pot-life ranging from about 10 minutes to about 12 hours, for example from about 30 minutes to about 5 hours or from about 1 hour to about 3 hours or from about 2 hours to about 3 hours.

If the coating composition is a waterborne coating composition, the coating composition may, for example, have an induction time ranging from about 10 minutes to about 30 minutes.

*Manufacturing Methods*

There is further provided herein methods for making the resin compositions, curing agent composition, coating compositions, and kits described herein.

In particular, the resin compositions described herein may be made by mixing a solvent, resin, barite, mica,

and optionally silica together in the required amounts. In certain embodiments, the resin composition is further diluted to obtain a desired viscosity prior to application to a substrate. In certain embodiments, the solvent is a water-based solvent such that a waterborne composition is formed.

In particular, the curing agent compositions described herein may be made by mixing a solvent, amine curing agent, barite, mica, and optionally silica together in the required amounts. In certain embodiments, the curing agent composition is further diluted to obtain a desired viscosity prior to application to a substrate. In certain embodiments, the solvent is a water-based solvent such that a waterborne composition is formed.

In particular, the dry coating compositions described herein may be made by mixing a solvent, epoxy resin, amine curing agent, barite, mica, and optionally silica under conditions suitable for the amine curing agent to crosslink the epoxy resin, and drying the mixture to remove the solvent. The drying may, for example, occur after the mixture has been applied to a substrate. In certain embodiments, the solvent is a water-based solvent such that a waterborne composition is formed prior to drying.

In particular, the resin compositions and curing agent compositions described herein may be made at temperatures equal to or less than about 40°C, for example equal to or less than about 35°C or equal to or less than about 30°C. For example, the waterborne compositions may be made at temperatures ranging from about 15°C to about 40°C or from about 20°C to about 30°C. This may, for example, assist in dispersing the inorganic materials in the resin.

The dry coating compositions described herein may be made by applying a composition comprising epoxy resin, amine curing agent, barite, mica and optionally silica to a substrate under conditions suitable for the amine curing agent to crosslink the epoxy resin, and drying the composition to form the dry coating composition. The composition may, for example, be a waterborne composition prior to drying.

The temperature and humidity conditions when making the resin compositions, curing agent compositions and coating compositions described herein may be varied depending on the epoxy resin and amine curing agent used but will typically be in the range of 10°C to 30°C.

Conditions suitable for the amine curing agent to crosslink the epoxy resin may, for example, be room temperature and atmospheric pressure (approximately 20 to 22°C and 101.3 kPa), although other conditions may also be suitable.

Drying may occur by any suitable means, for example, be application of heat or pressure, although the drying may, for example, occur at room temperature and atmospheric pressure.

The following numbered paragraphs define particular embodiments of the present invention:

1. A resin composition for use in a coating composition, the resin composition comprising:

    (i) an epoxy resin;
    (ii) barite; and
    (iii) mica;

    wherein the weight ratio of barite to mica is equal to or greater than about 2.0; and
    wherein the resin composition further comprises from 0 wt% to about 10 wt% of silica, based on the total solids content of the resin composition.

2. A curing agent composition for use in a coating composition, the curing agent composition comprising:

    (i) an amine curing agent;
    (ii) barite; and
    (iii) mica;

    wherein the weight ratio of barite to mica is equal to or greater than about 2.0; and
    wherein the curing agent composition further comprises from 0 wt% to about 10 wt% of silica, based on the total solids content of the curing agent composition.

3. A dry coating composition comprising:

    (iv) an epoxy resin cross-linked with an amine curing agent;
    (v) barite; and
    (vi) mica;

    wherein the weight ratio of barite to mica is equal to or greater than about 2.0; and
    wherein the dry coating composition further comprises from 0 wt% to about 10 wt% of silica, based on the total

solids content of the dry coating composition.

4. The resin composition of paragraph 1 or the dry coating composition of paragraph 3, wherein the epoxy resin is a solid epoxy resin.

5. The resin composition or dry coating composition of paragraph 1, 3, or 4, wherein the epoxy resin has an epoxy equivalent weight (EEW) equal to or less than about 1000 g/mol, for example equal to or less than about 800 g/mol, for example equal to or less than about 600 g/mol.

6. The resin composition, curing agent composition, or dry coating composition of any preceding paragraph, wherein the weight ratio of barite to mica is equal to or greater than about 2.0 and equal to or less than about 5.0.

7. The resin composition or dry coating composition of any preceding paragraph, wherein:

(i) the weight ratio of epoxy resin to barite is equal to or greater than about 1.0, for example equal to or greater than about 1.5, for example equal to or greater than about 2.0; and/or
(ii) the weight ratio of epoxy resin to barite is equal to or less than about 5.0, for example equal to or less than about 4.0; and/or
(iii) the weight ratio of epoxy resin to mica is equal to or greater than about 2.0, for example equal to or greater than about 3.0, for example equal to or greater than about 4.0; and/or
(iv) the weight ratio of epoxy resin to mica is equal to or less than about 10.0, for example equal to or less than about 8.0; and/or
(v) the weight ratio of epoxy resin to total inorganic particulate material is equal to or greater than about 0.5 and/or equal to or less than about 2.0.

8. The curing agent composition or the dry coating composition of any preceding paragraph, wherein:

(i) the weight ratio of amine curing agent to barite is equal to or greater than about 0.5; and/or
(ii) the weight ratio of amine curing agent to barite is equal to or less than about 2.0; and/or
(iii) the weight ratio of amine curing agent to mica is equal to or less than about 1.0; and/or
(iv) the weight ratio of amine curing agent to mica is equal to or greater than about 2.5; and/or
(v) the weight ratio of amine curing agent to total inorganic particulate material is equal to or greater than about 0.1 and/or equal to or less than about 0.75.

9. The resin composition of any of paragraphs 1 or 4 to 7 or the dry coating composition of any of paragraphs 3 to 7, wherein the resin composition or dry coating composition comprises, based on the total solids content of the resin composition or dry coating composition:

(i) equal to or greater than about 20 wt% and/or equal to or less than about 60 wt% of resin, for example from about 30 wt% to about 50 wt% of resin; and/or
(ii) equal to or greater than about 10 wt% and/or equal to or less than about 30 wt% of barite, for example from about 10 wt% to about 20 wt% of barite; and/or
(iii) equal to or greater than about 5 wt% and/or equal to or less than about 15 wt% of mica, for example from about 5 wt% to about 10 wt% of mica; and/or
(iv) equal to or greater than about 20 wt% and/or equal to or less than about 60 wt% total inorganic particulate material.

10. The curing agent composition of paragraph 2, 6, or 8, wherein the curing agent composition comprises, based on the total solids content of the curing agent composition:

(i) equal to or greater than about 5 wt% and/or equal to or less than about 20 wt% of curing agent; and/or
(ii) equal to or greater than about 10 wt% and/or equal to or less than about 30 wt% of barite; and/or
(iii) equal to or greater than about 5 wt% and/or equal to or less than about 15 wt% of mica; and/or
(iv) equal to or greater than about 20 wt% and/or equal to or less than about 60 wt% total inorganic particulate material.

11. The resin composition, curing agent composition, or dry coating composition of any preceding paragraph, wherein the barite has:

(i) a $d_{50}$ (laser) ranging from about 0.5 $\mu$m to about 10.0 $\mu$m; and/or
(ii) a $d_{50}$ (sedigraph) ranging from about 0.5 $\mu$m to about 20.0 $\mu$m; and/or
(iii) a $d_{95}$ (sedigraph) ranging from about 5.0 $\mu$m to about 50.0 $\mu$m; and/or
(iv) an oil absorption ranging from about 10.0 ml/100g to about 20.0 ml/100g; and/or
(v) a BET surface area ranging from about 0.5 to about 3.0 $m^2/g$; and/or
(vi) a brightness ranging from about 80 Y to about 95 Y.

12. The resin composition, curing agent composition, or dry coating composition of any preceding paragraph, wherein the mica has:

(i) a $d_{50}$ (laser) ranging from about 10.0 $\mu$m to about 30.0 $\mu$m; and/or
(ii) a $d_{50}$ (sedigraph) ranging from about 1.0 $\mu$m to about 15.0 $\mu$m; and/or
(iii) a $d_{95}$ (sedigraph) ranging from about 10.0 $\mu$m to about 30.0 $\mu$m; and/or
(iv) an oil absorption ranging from about 60 ml/100g to about 100 ml/100g; and/or
(v) a BET surface area ranging from about 3.0 to about 8.0 $m^2/g$; and/or
(vi) a brightness ranging from about 65 Y to about 85 Y.

13. The resin composition, curing agent composition, or dry coating composition of any preceding paragraph, further comprising one or more additional inorganic particulate materials and/or further comprising one or more inorganic or organic pigments.

14. The resin composition, curing agent composition, or dry coating composition of any preceding paragraph, further comprising titanium dioxide.

15. The resin composition, curing agent composition, or dry coating composition of paragraph 14, wherein:

(i) the weight ratio of epoxy resin to titanium dioxide in the resin composition or dry coating composition is equal to or greater than about 1.0 and/or equal to or less than about 4.0; and/or
(ii) the weight ratio of amine curing agent to titanium dioxide in the curing agent composition or dry coating composition is equal to or greater than about 1.0 and/or equal to or less than about 4.0; and/or
(iii) the weight ratio of barite to titanium dioxide is equal to or less than about 1.0 and/or equal to or greater than about 0.2; and/or
(iv) the weight ratio of mica to titanium dioxide is equal to or less than about 0.5 and/or equal to or greater than about 0.1; and/or
(v) the resin composition or dry coating composition comprises equal to or greater than about 5 wt% and/or equal to or less than about 40 wt% titanium oxide, for example from about 15 wt% to about 30 wt% titanium dioxide, based on the total solids content of the resin composition or dry coating composition; and/or
(vi) the curing agent composition comprises equal to or greater than about 5 wt% and/or equal to or less than about 30 wt% titanium dioxide, based on the total solids content of the curing agent composition.

16. The resin composition, curing agent composition or dry coating composition of any preceding paragraph, wherein the resin composition, curing agent composition, or dry coating composition further comprises at least about 0.5 wt% silica.

17. The resin composition, curing agent composition, or dry coating composition of paragraph 16, wherein the silica has:

(i) a $d_{50}$ (laser) ranging from about 2.0 $\mu$m to about 8.0 $\mu$m; and/or
(ii) a $d_{50}$ (sedigraph) ranging from about 2.0 $\mu$m to about 8.0 $\mu$m; and/or
(iii) a $d_{95}$ (sedigraph) ranging from about 8.0 $\mu$m to about 20.0 $\mu$m; and/or
(iv) an oil absorption ranging from about 20 ml/100g to about 60 ml/100g; and/or
(v) a BET surface area ranging from about 0.5 to about 4.0 $m^2/g$; and/or
(vi) a brightness ranging from about 70 Y to about 95 Y.

18. The resin composition, curing agent composition, or dry coating composition of paragraph 16 or 17, wherein:

(i) the weight ratio of epoxy resin to silica in the resin composition or dry coating composition is equal to or greater than about 2.0 and/or equal to or less than about 6.0; and/or

(ii) the weight ratio of amine curing agent to silica in the curing agent composition is equal to or greater than about 0.2 and/or equal to or less than about 2.0; and/or
(iii) the weight ratio of barite to silica is equal to or greater than about 0.5 and/or equal to or less than about 2.0; and/or
(iv) the weight ratio of mica to silica is equal to or greater than about 0.25 and/or equal to or less than about 1.0.

19. The resin composition, curing agent composition, or dry coating composition of any preceding paragraph, wherein the resin composition, curing agent composition, or dry coating composition has:

(i) a pigment volume concentration (PVC) ranging from about 10 % to about 50 %, for example from about 25 % to about 35 %; and/or
(ii) a critical pigment volume concentration (CPVC) ranging from about 40 % to about 60 %, for example from about 45 % to about 55 %; and/or
(iii) a ratio of PVC to CPVC from about 0.3 to about 0.7.

20. The resin composition of any preceding paragraph, wherein the resin composition further comprises an amine curing agent.

21. The curing agent composition of any preceding paragraph, wherein the curing agent composition further comprises an epoxy resin.

22. The dry coating composition of any preceding paragraph or the resin composition of paragraph 20 or the curing agent composition of paragraph 21 wherein:

(i) the weight ratio of epoxy resin to amine curing agent is equal to or greater than about 1.0 and/or equal to or less than about 8.0; and/or
(ii) the stoichiometric ratio of epoxy resin to amine curing agent is equal to or greater than about 0.7 and/or equal to or less than about 1.7.

23. A kit for making a coating composition, wherein the kit comprises:

(i) a resin composition according to any preceding paragraph and an amine curing agent; or
(ii) a curing agent composition according to any preceding paragraph and an epoxy resin;

wherein the resin and the curing agent are in separate containers.

24. The kit of paragraph 23, wherein all components of the kit are waterborne compositions.

25. A flooring having the dry coating composition of any preceding paragraph applied thereon.

26. A method of making a resin composition of any preceding paragraph, the method comprising mixing a solvent, an epoxy resin, barite, mica, and optionally silica, wherein the weight ratio of barite to mica is equal to or greater than about 2.0.

27. A method of making a curing agent composition of any preceding paragraph, the method comprising mixing a solvent, an amine curing agent, barite, mica, and optionally silica, wherein the weight ratio of barite to mica is equal to or greater than about 2.0.

28. A method of making a dry coating composition of any of any preceding paragraph, the method comprising mixing a solvent, an epoxy resin, an amine curing agent, barite, mica, and optionally silica under conditions suitable for the amine curing agent to crosslink the epoxy resin, and drying the mixture to remove the solvent, wherein the weight ratio of barite to mica is equal to or greater than about 2.0.

29. Use of a resin composition of any preceding paragraph to make a coating composition, wherein the resin composition is mixed with an amine curing agent to crosslink the epoxy resin.

30. Use of a curing agent composition of any preceding paragraph to make a coating composition, wherein the curing agent composition is mixed with an epoxy resin to crosslink the epoxy resin.

31. Use of mica to increase the hot tire resistance of a coating composition.

32. The use of paragraph 31, wherein the coating composition is a dry coating composition according to any preceding paragraph.

33. The resin composition or curing agent composition of any of claims 1 to 22, wherein the resin composition or curing agent composition is a waterborne resin composition or a waterborne curing agent composition.

34. The method of claim 26, 27, or 28, wherein the solvent is a water-based solvent.

## EXAMPLES

Materials

The minerals used in the compositions tested had the following properties.

| Mineral | $d_{50}$ (laser) | $d_{95}$ (sedigraph) | $d_{50}$ (sedigraph) | Oil Absorption (ml/100g) | BET Surface Area ($m^2/g$) | Brightness (Y) |
|---|---|---|---|---|---|---|
| Barite | 3.3 | 13.3 | 3.2 | 15 | 1.7 | 89.7 |
| Silica | 4.8 | 12.9 | 4.6 | 38 | 2.2 | 83.4 |
| Mica | 21.9 | 19.1 | 6.8 | 78 | 5.3 | 75.4 |
| Titanium dioxide | | | | 18 | | |

The additives Additol VXW 6208, Additol VXW 6393, Additol VXW 6210N, and Additol VXW 6503, the epoxy resin Beckopox PE 2384/57WA, and the amine curing agent Beckopox EH 623 w/80WA were obtained from Allnex, Netherlands, B.V.
The additive texanol was obtained from Eastman.
The following substrates were used in the test methods as specified below.

- Fibercement: Eterplan N, 70 x 150 mm (Rocholl GmbH)
- Steel: Q-Panel S46, steel, ground one side, 0.8 x 102 x 152 mm (Q-lab)
- Steel: Q-Panel S412, steel, ground one side, 0.8 x 102 x 305 mm (Q-lab)
- Contrast chart: Leneta 2A, 140 x 254 mm (Byk)
- Plasterboard: BA13
- Concrete substrate (according to EN 1766, type MC0, 40, micro balls surface 3-4 mm)

The following application tools were used in the test methods as specified below:

- Roller: For painting, anti-drop short 110 mm, microfiber polyester 10 mm
- Applicators: Film applicator system wasag Model 288 (Erichsen)

The tires used in the hot tire resistance test were NORAUTO PREVENSKYS 3 185/70 R14 88 T tires, wherein 185 means 185 mm width, 70 means the height of the tire on the side equal to 70% of the width, R for radial, 14 for 14 inch interior diameter, 88 for the load index, T indicates a maximal speed of 190 kg/h.

Compositions Tested

The tested compositions were formulated to have a PVC/CPVC ratio of 0.54 +/- 0.02 and a solids by volume of 55.3 % +/- 1.6 by adjusting the amount of binder and titanium dioxide.
Excluding the amine hardener, the composition had a total weight of 100 %. The quantity of amine hardener was calculated with a stoichiometric ratio of 1:1.
The quantity of amine adduct hardener was calculated as follows.

$$m_{amine} = \text{epoxy index} \times Eq_{amine(NH)}$$

with epoxy index = ($100/Eq_{epoxy}$) (for 100 g of epoxy binder)

$$m_{amine} = (100/Eq_{epoxy}) \times Eq_{amine(NH)}$$

So, for 100 g of epoxy binder:

$$m_{amine} = (38/750) \times 200 = 26.7 \text{ g of amine for 100 g of epoxy}$$

For 38 g of epoxy binder:

$$m_{amine} = (38/100) \times 26.7 = 10.15 \text{ g of amine}$$

$Eq_{amine(NH)}$ is defined as the ratio between the molecular weight of the monomer and the number of NH groups in the form of delivery.

$Eq_{epoxy}$ is defined as the ratio between the molecular weight of the monomer and the number of epoxy groups in the form of delivery.

The compositions tested had the following formulations.

| | Barite Only | Barite & Mica | Barite & Silica |
|---|---|---|---|
| **ADDITIVES/SOLVENTS** | | | |
| Water | 9.70 | 13.00 | 7.5 |
| Additol VXW 6208 (dispersing additive) | 1.00 | 1.00 | 1.0 |
| Additol VXW 6393 (defoamer silicon free) | 0.50 | 0.50 | 0.5 |
| Additol VXW 6210N (defoamer silicon) | 0.20 | 0.20 | 0.2 |
| Additol VXW 6503N (Flow and wetting agent) | 0.40 | 0.40 | 0.4 |
| Texanol (cosolvent) | 2.00 | 2.00 | 2.0 |
| ***Total additives/solvent*** | ***13.80*** | ***17.10*** | ***11.6*** |
| **PIGMENTS/FILLERS** | | | |
| Titanium dioxide | 20.20 | 21.80 | 19.2 |
| Barite | 28.00 | 14.00 | 14.0 |
| Mica | - | 6.00 | - |
| Silica | - | - | 16.2 |
| ***Total pigments/fillers*** | ***48.20*** | ***41.80*** | ***49.4*** |
| **BINDERS** | | | |
| Beckopox EP 2384w/57WA (epoxy resin) | 38.00 | 41.10 | 39.0 |
| Beckopox EH 623w80WA (amine curing agent) | 10.15 | 10.97 | 10.4 |
| ***Total binders*** | ***48.15*** | ***52.07*** | ***49.4*** |
| ***Total Formulation*** | ***110.15*** | ***110.97*** | ***110.4*** |

The compositions tested had the following volume parameters.

| | Barite Only | Barite & Mica | Barite & Silica |
|---|---|---|---|
| PVC (%) | 30.5 | 27.7 | 34.6 |
| CPVC (%) | 59.0 | 49.3 | 56.5 |
| Ratio PVC/CPVC | 0.52 | 0.56 | 0.61 |
| Density (g/ml) | 1.69 | 1.56 | 1.65 |
| Vol% filler/pigments | 17.3 | 14.9 | 21.0 |
| Vol% dry binder | 39.5 | 39.0 | 39.5 |
| Vol% dry components | 56.9 | 53.9 | 60.5 |
| Vol% solvents | 43.1 | 46.1 | 39.5 |

The compositions tested had the following weight parameters

| | Barite Only | Barite & Mica | Barite & Silica |
|---|---|---|---|
| Wt% filler/pigments | 78.0 | 74.0 | 80.0 |
| Wt% dry binder | 29.8 | 32.2 | 30.6 |
| Wt% dry components | 48.2 | 41.8 | 49.4 |
| Wt% solvents | 32.2 | 37.0 | 30.5 |
| Consumption of binder (ml) | 7.8 | 10.9 | 10.7 |

The composition containing barite and mica provides a cost saving per litre over the composition containing barite only due to the low density of mica.

The formulations were made by the following method.

Part I: The epoxy binder was mixed with Additol VXW 6208 (dispersing additive) and Additol VXW 6393 (2/3 of the silicon-free defoamer on the total content) at a low shear of 800 rpm for 5 minutes. Additol VXW 6393 was well agitated before addition to the mixture to avoid sedimentation of the additive in its can.

Part II: Additol 6210N (silicon defoamer) was incorporated into the mixture at a high shear of 1000 rpm for 2 minutes. Then the titanium dioxide, barite, mica, and silica (if present) was dispersed at a high shear of 2000 rpm for 20 minutes at a temperature of less than 40°C.

Part III: Additol VXW 6393 (1/3 of the silicon-free defoamer on the total content), Additol VXW 6503N (substrate wetting additive), texanol (cosolvent), and the rest of the water were added at a low shear of 800 rpm for 5 minutes. The mixture was rested for 24 hours and the viscosity of the base determined.

Part IV: The base mixture (formed by steps I to III) were mixed with the amine curing agent and water for dilution at a low shear of 500 rpm for 3 minutes. The quantity of water added depends on the viscosity of the pain (target 30-40s with a flow cup 4). The product has to be used within 30 minutes of mixing the base and the amine curing agent.

Test Methods

The following test methods were used to determine the properties of the coating compositions.

| Test | Norm or Method | Description |
|---|---|---|
| Pot-life | ISO 9514 - Determination of the pot-life of liquid systems | Gloss & viscosity control based on norms ISO 2813 & ISO 2431 |
| Viscosity | ASTM D1200 & ISO 2431 - Determination of flow time by use of flow cups | ASTM cup 4 Ford (Braive Instruments) |
| Gloss | ISO 2813 - Determination of specular gloss of non-metallic paint films at 20, 60 and 85 degrees | Substrate: fiber cement and steel<br>Application: 200 $\mu$m WFT<br>Drying time: 24 hours |

(continued)

| Test | Norm or Method | Description |
|---|---|---|
| Hot Tire Resistance | Internal Method | Substrate: fiber cement<br>Application: roller, 2 coats, 200 g/$m^2$ per coat<br>Drying time: 7 days or 14 days |
| Abrasion (Taber) | ISO 7784-2 - Determination of resistance to abrasion - Rotating abrasive rubber Wheel method | Substrate: fiber cement<br>Application: roller, 2 coats, 200 g/$m^2$ per coat<br>Drying time: 7 days or 14 days |
| Hardness (Persoz pendulum) | ISO 1522 - Pendulum damping test | Substrate: glass<br>Application: 200 $\mu$m WFT<br>Drying time: 24 hours, 7 days, or 28 days |
| Falling Impact | ISO 6272 - Falling-weight impact | Substrate: steel<br>Application: 200 $\mu$m WFT<br>Drying time: 7 days |
| Cracking | ISO 4628-4 - Designation of a degree of cracking | Substrate: plasterboard<br>Application: 300 $\mu$m to 1500 $\mu$m<br>Drying time: 24 hours |
| Bending | ISO 6860 - Bend test (conical mandrel) | Substrate: steel<br>Application: 200 $\mu$m WFT<br>Drying time: 7 days |
| Cupping | ISO 1520 - Cupping test | Substrate: steel<br>Application: 200 $\mu$m WFT<br>Drying time: 7 days |
| Adhesion (Cross-cut) | ISO 2409 - Cross-cut test | Substrate: fiber cement<br>Application: roller, 2 coats, 200 g/$m^2$ per coat<br>Drying time: 24 hours or 7 days |
| Adhesion (Pull-off) | ISO 4624 - Pull-off test for adhesion | Substrate: concrete<br>Application: roller, 2 coats, 200 g/$m^2$ per coat<br>Drying time: 24 hours or 7 days |
| Stain Resistance | Internal method | Substrate: fiber cement<br>Application: roller, 2 coats, 200 g/$m^2$ per coat<br>Drying time: 7 days |
| Vapour Permeability | ISO 7783 - Determination and classification of water-vapour transmission rate (permeability) | Substrate: Canson paper sheet<br>Application: roller, 2 coats, 200 g/$m^2$ per coat<br>Drying time: 7 days |

*Dry Film Thickness*

Calculations for theoretical dry film thickness on fiber cement according to norm ISO 23811:

***Dry film theoretical density (g/ml):***

$$\rho_t = \frac{\rho_{paint} \times Solids\ Weight(\%)}{100 - \frac{\rho_{paint}}{\rho_{solvent}} \times (100 - Solids\ Weight\ (\%))}$$

$\rho_{solvent} = \rho_{watert} = 1g/ml$

***Theoretical spreading rate (m²/L):***

$$SR_{theoretical} = \frac{Solids\ Weight\ (\%)}{\rho_t \times Dry\ film\ thickness\ (\mu m)} \times \rho_{paint} \times 10$$

It is important to control the dry film thickness between the barite only composition and the barite and mica composition to be sure that the two compositions are comparable. The dry film thickness is calculated for the applications on fiber cement for hot tire resistance, abrasion resistance, stain resistance and adhesion.

For applications on steel, the dry film thickness can be measured using Byko-Test 7500 cat 3610 (BYK) equipment.

*Abrasion Resistance*

The coating was applied with a roller in 2 coats with a targeted spreading rate of 200 g/m$^2$ per coat. A drying time of 24 hours between coats and 7 days before the abrasion resistance test was used. The abrasion resistance is determined by causing cycles of scrub on the coating. By measuring the loss of weight after several cycles it can be determined if the paint is resistant or not to abrasion.

1000 cycles were selected and the panel tested is weighed every 200 cycles. The abrasion wheel used was CS-10 Calibrase (medium abrasion action) with a loading of 1 kg. The wheel is refaced every 1000 cycles with a refacing disc S-11 for 50 cycles.

Equipment reference: Taber type 5130 (Taber Industries).

*Hot Tire Resistance*

Hot tire resistance was measured using the method described below.

1)Cut tire sections (80 x 40 mm) on the tread area of the tire.

2)The coating was applied with a roller to a piece of fiber cement (150 mm x 70 mm x 5 mm) with a spreading rate of 200 g/m$^2$.

3)A second coating was applied after 24 hours of drying with the same targeted spreading rate of 200 g/m$^2$.

4)The panels were allowed to dry for 7 days or 14 days.

5)A tire section is heated during 24 hours at 105°C.

6)The coated panel is wetted with demineralized water (application on the surface that is in contact with the tire section with a wash bottle).

7)After heating, the piece of tire is then placed on the surface of the paint film with a loading pressure of 20 kg/cm$^2$ during 24 hours in normal temperature conditions.

8)After compression, the damage on the coating composition is assessed visually and assigned a numerical value by assessing tire marks, gloss defects and rubber residue and adding the points associated with each to obtain a final value.

| Visual Defect - Tire Mark | Points |
|---|---|
| No tire mark | 0 |
| Slight tire mark | 1 |
| Significant tire mark | 2 |

| Visual Defect - Gloss | Points |
|---|---|
| No sheen deviation | 0 |
| Sheen deviation | 1 |

| Visual Defect - Rubber Residue | Points |
|---|---|
| No rubber residue | 0 |
| Slight tire rubber residue | 1 |
| Significant rubber residue | 2 |

*Gloss*

Products are applied on steel (wet film thickness of 200 μm) and on fiber cement with a roller in 2 coats (with 24 hours of drying between each coat and a targeted spreading rate of 200 g/$m^2$ per coat to have a dry film thickness between 100 μm and 120 μm). Gloss level is measured on fiber cement and on steel after 24 hours of drying with a glossmeter at 20°, 60° and 85°.
Equipment reference: Micro-Tri-gloss (BYK).

*Falling Impact*

The coating is applied on steel (wet film thickness of 200 μm) with 7 days of drying before the test. The test determines the minimum drop height for which the coating cracks or peels from its substrate by gradually increasing the height.
Equipment reference: Model 304 (Erichsen).

*Bending*

The coating is applied on steel (wet film thickness of 200 μm) with 7 days of drying before the test. The flexibility of the coating can be assessed by subjecting the coating to bending using a conical mandrel. Cracks and/or a detachment from the substrate will occur and the length of the extent of cracking along the panel is determined from the small end of the mandrel (diameter 3.2 mm).
Equipment reference: 1101 (Sodexim).

*Cupping*

The coating is applied on steel (wet film thickness of 200 μm) with 7 days of drying before the test. The cupping test assesses the elasticity of the coating. The coated panel is placed between two rings and pushed by a hemispherical indenter. The coated panel is forming a dome and the formation will lea cracks and/or detachments from the substrate. The maximum depth of indentation at which the coating passed is determined.
Equipment reference: Model 200 (Erichsen).

*Hardness*

The coating is applied on a glass panel (wet film thickness of 200 μm). The Persoz hardness of the film was measured after 7 days, 14 days, 21 days, and 28 days of drying.

*Cracking*

The coating is applied from 300 μm to 1500 μm and the thickness where cracks appear on the coating is determined.
Equipment reference: Film applicator system wasag - Model 288 (Erichsen).

*Adhesion (pull-off)*

The coating is applied with a roller in 2 coats on fiber cement with a targeted spreading rate of 200 g/$m^2$ per coat with a drying time of 24 hours between coats. A drying time of 24 hours or 7 days before the test was allowed. 3 tests per coating are performed and defects on the film are visually assessed.
According to the norm ISO 4624, for pull-off adhesion of 2 component epoxy adhesive compositions, it is recommended that the bonding properties of the adhesive are greater than those of the coating under test.
Equipment reference: Positest AT-A (BYK).

*Adhesion (cross-cut)*

The coating is applied with a roller in 2 coats on a fiber cement with a targeted spreading rate of 200 g/$m^2$ per coat and a drying time of 24 hours between coats. A drying time of 24 hours or 7 days before the test is allowed. The adhesion class is reported (0 is best, 5 is worst) according to the norm classification.
Equipment reference: Plates for cross-cut adhesion (Brant-Industrie).

*Stain Resistance*

The coating is applied with a roller in 2 coats on a fiber cement with a targeted spreading rate of 200 g/$m^2$ per coat and a drying time of 24 hours between coats. A drying time of 7 days before the test is allowed. Stains were placed on the film and covered with glass or plastic tubes to avoid evaporation. After 1 hour of contact the stains were released and defects on the film were assessed. Defects may also be assessed after 24 hours of contact.
Equipment reference: Motor oil (Total Activa 5W30), white spirit, acetone, acetic acid 1N, NaOH 10%, lubricant (3en1 Chaines & Cables), soap (Caflon NAS24A sodium dodecyl benzene sulfonate, diluted 0.25%), demineralized water.

Results

*Hot Tire Resistance*

The spreading rate on fiber cement was as shown below.

| | **Barite Only** | **Barite & Mica** | **Barite & Silica** |
|---|---|---|---|
| **Spreading rate in 2 coats on fiber cement (g/$m^2$)** | 202.9 | 199.9 | 203.0 |
| **Spreading rate in 2 coats on fiber cement ($m^2$/l)** | 7.2 | 6.8 | 7.0 |
| **Theoretical dry film thickness on fiber cement (μm)** | 95.0 | 94.7 | 101.6 |

The results for the hot tire resistance test after 7 days of drying are shown below.

| | **7 days of drying** | | | | |
|---|---|---|---|---|---|
| **Coating** | **Tested Panel** | **Sheen Deviation** | **Tire Marks** | **Rubber Residue** | **Total** |
| **Barite only** | 1 | 1 | 1 | 0 | 2 |
| | 2 | 1 | 1 | 0 | 2 |
| | 3 | 1 | 2 | 2 | 5 |
| | Average | 1 | 1.3 | 0.7 | 3 |

(continued)

| | 7 days of drying | | | | |
|---|---|---|---|---|---|
| Coating | Tested Panel | Sheen Deviation | Tire Marks | Rubber Residue | Total |
| Barite & Mica | 1 | 1 | 0 | 0 | 1 |
| | 2 | 1 | 0 | 0 | 1 |
| | 3 | 1 | 0 | 0 | 1 |
| | 4 | 1 | 0 | 0 | 1 |
| | 5 | 1 | 0 | 0 | 1 |
| | 6 | 1 | 0 | 0 | 1 |
| | Average | 1 | 0 | 0 | 1 |

The results for the hot tire resistance test after 14 days of drying are shown below.

| | 14 days of drying | | | | |
|---|---|---|---|---|---|
| Coating | Tested Panel | Sheen Deviation | Tire Marks | Rubber Residue | Total |
| Silica | 1 | 1 | 2 | 1 | 4 |
| | 2 | 1 | 2 | 0 | 3 |
| | 3 | 1 | 2 | 0 | 3 |
| | Average | 1 | 2 | 0.3 | 3.3 |
| Barite Only | 1 | 1 | 0 | 0 | 1 |
| | 2 | 1 | 0 | 0 | 1 |
| | 3 | 1 | 1 | 1 | 3 |
| | 4 | 1 | 2 | 1 | 4 |
| | 5 | 1 | 1 | 0 | 2 |
| | 6 | 1 | 1 | 0 | 2 |
| | Average | 1 | 0.8 | 0.3 | 2.2 |
| Barite & Mica | 1 | 1 | 1 | 0 | 2 |
| | 2 | 1 | 0 | 0 | 1 |
| | 3 | 1 | 0 | 0 | 1 |
| | 4 | 1 | 0 | 0 | 1 |
| | 5 | 1 | 0 | 0 | 1 |
| | 6 | 1 | 0 | 0 | 1 |
| | 7 | 1 | 0 | 0 | 1 |
| | 8 | 1 | 0 | 0 | 1 |
| | 9 | 1 | 0 | 0 | 1 |
| | Average | 1 | 0.1 | 0 | 1.1 |

The use mica improved the hot tire resistance of the coatings.

*Viscosity*

The viscosity of the barite only composition was 40 s and the viscosity of the barite and mica composition was

38 s (cup 4).

*Aesthetical Aspects*

The covering power of the barite and mica composition was slightly higher than the barite only composition, which may be due to the difference in spreading rate.

| | Barite Only | Barite & Mica |
|---|---|---|
| **Spreading rate in 2 coats on fiber cement (g/m$^2$)** | 120.0 | 136.7 |
| **Spreading rate in 2 coats on fiber cement (m$^2$/l)** | 12.8 | 10.6 |
| **Theoretical dry film thickness on fiber cement (μm)** | 53.3 | 61.2 |

The barite only formulation is glossy whereas the barite and mica formulation is high satin.

| | Barite Only | Barite & Mica |
|---|---|---|
| **Gloss at 20° (GU)** | 36.5 | 15.7 |
| **Gloss at 60° (GU)** | 82.1 | 54.8 |
| **Gloss at 85° (GU)** | 87.8 | 62.2 |

These results match with knowledge of mineral properties. Mica provides matting below CPVC (high oil absorption value and high lamellarity). On the other hand, barite provides gloss below CPVC (low oil absorption value).

*Abrasion Resistance*

The spreading rate on fiber cement was as shown below.

| | Barite & Silica | Barite Only | Barite & Mica |
|---|---|---|---|
| **Spreading rate in 2 coats on fiber cement (g/m$^2$)** | 202.0 | 199.0 | 200.0 |
| **Spreading rate in 2 coats on fiber cement (m$^2$/l)** | 7.1 | 7.3 | 6.8 |
| **Theoretical dry film thickness on fiber cement (μm)** | 101.3 | 93.3 | 95.1 |

The abrasion resistance results are shown in Figure 1. The composition containing barite and mica had the same abrasion resistance as the composition comprising barite only.

*Hardness*

The results are shown in Figure 2 for 7 days, 14 days, 21 days, and 28 days after drying. The hardness of the film containing barite and mica evolves in the same way as the film containing barite only. The film achieves the best hardness after 14 days of drying which means that the hot tire resistance is critical after 7 days of drying.

*Adhesion (pull-off)*

The spreading rate on fiber cement was as shown below.

| | Barite Only | Barite & Mica |
|---|---|---|
| **Spreading rate in 2 coats on fiber cement (g/m$^2$)** | 123.3 | 151.7 |
| **Spreading rate in 2 coats on fiber cement (m$^2$/l)** | 12.0 | 9.0 |
| **Theoretical dry film thickness on fiber cement (μm)** | 56.8 | 71.8 |

The results after 24 hours of drying are shown below.

| | Barite Only | Barite & Mica |
|---|---|---|
| **1** | 0.94 MPa | 1.01 MPa |
| **2** | 0.98 MPa | 0.97 MPa |
| **3** | 1.06 MPa | 1.02 MPa |
| **Average** | 0.99 MPa | 1.00 MPa |
| **Rupture Type** | 100% cohesive A (substrate) | 100% cohesive A (substrate) |

The results after 7 days of drying are shown below.

| | Barite Only | Barite & Mica |
|---|---|---|
| **1** | 0.45 MPa | 0.52 MPa |
| **2** | 0.69 MPa | 0.6 MPa |
| **3** | 0.57 MPa | 0.71 MPa |
| **Average** | 0.57 MPa | 0.61 MPa |
| **Rupture Type** | 10% adhesive failure Y/Z (between adhesive and dolly) no. 1/2<br>No. 3 90% cohesive A (substrate)<br>No. 3 80% adhesive F/Y (First coat/glue) | 100% adhesive failure Y/Z (between adhesive and dolly) no. 3<br>100% cohesive A (substrate no. 1/2) |

*Adhesion (cross-cut)*

The results are shown below. The cross-cut adhesion was excellent for both products. The cross-cut adhesion was made on the same panel as the pull-off adhesion.

| | Barite Only | Barite & Mica |
|---|---|---|
| **24 hours** | 0 | 0 |
| **7 days** | 0 | 0 |

*Cupping*

The results are shown below. The flexibility of the coating composition is approximately the same for the composition comprising barite only and the composition comprising barite and mica.

| | Barite & Silica | Barite Only | Barite & Mica |
|---|---|---|---|
| **Depth (mm)** | 5.0 | 3.0 | 1.8 |

*Bending*

The results are shown below. The bending of the coating composition is approximately the same for the composition comprising barite only and the composition comprising barite and mica.

| | Barite & Silica | Barite Only | Barite & Mica |
|---|---|---|---|
| **Height (mm)** | 24.5 | 56.5 | 124.5 |

*Cracking*

Both products have perfect cracking resistance (>1500 μm)

*Impact Resistance*

Both formulations have low impact resistance (<5cm)

*Chemical Resistance*

The spreading rate on fiber cement was as shown below.

| | Barite Only | Barite & Mica |
|---|---|---|
| **Spreading rate in 2 coats on fiber cement (g/m$^2$)** | 124.2 | 166.7 |
| **Spreading rate in 2 coats on fiber cement (m$^2$/l)** | 12.6 | 8.2 |
| **Theoretical dry film thickness on fiber cement (μm)** | 54.2 | 78.8 |

The chemical resistance tests were performed after 1 hour and 24 hours of contact. The results presented below are from the observation after 24 hours of contact.

| | Blistering | Weakening | Discoloration |
|---|---|---|---|
| **Barite & Mica** | | | |
| Demineralized water | 0 | 0 | Y |
| Soap | 0 | 0 | Y |
| Acetone | 0 | 0 | Y |
| White spirit | 0 | 0 | N |
| Lubricant | 0 | 0 | Y |
| Motor oil | 0 | 0 | N |
| Acetic acid 1N | 0 | 0 | Y |
| NaOH 10% | 0 | 0 | N |
| **Barite only** | | | |
| Demineralized water | 0 | 0 | N |
| Soap | 0 | 0 | N |
| Acetone | 0 | 0 | Y |
| White spirit | 0 | 0 | Y |
| Lubricant | 0 | 0 | Y |
| Motor oil | 0 | 0 | N |
| Acetic acid 1N | 0 | 0 | Y |
| NaOH 10% | 0 | 0 | N |

Both formulations had the same stain resistance.

*Conclusions*

The composition comprising barite and mica provided improved hot tire resistance compared to the barite only composition. The other properties required for conventional 2 component waterborne epoxy floor coatings are maintained (abrasion resistance, stain resistance, adhesion, pot-life, viscosity, hardness, flexibility).

The foregoing broadly describes certain embodiments of the present invention without limitation. Variations and modifications as will be readily apparent to those skilled in the art are intended to be within the scope of the present invention as defined in and by the appended claims.

## Claims

1. A resin composition for use in a coating composition, the resin composition comprising:

   (i) a epoxy resin;
   (ii) barite; and
   (iii) mica;

   wherein the weight ratio of barite to mica is equal to or greater than about 2.0; and
   wherein the resin composition further comprises from 0 wt% to about 10 wt% of silica, based on the total solids content of the resin composition.

2. A curing agent composition for use in a coating composition, the curing agent composition comprising:

   (i) a amine curing agent;
   (ii) barite; and
   (iii) mica;

   wherein the weight ratio of barite to mica is equal to or greater than about 2.0; and
   wherein the curing agent composition further comprises from 0 wt% to about 10 wt% of silica, based on the total solids content of the curing agent composition.

3. A dry coating composition comprising:

   (i) an epoxy resin cross-linked with an amine curing agent;
   (ii) barite; and
   (iii) mica;

   wherein the weight ratio of barite to mica is equal to or greater than about 2.0; and
   wherein the dry coating composition further comprises from 0 wt% to about 10 wt% of silica, based on the total solids content of the dry coating composition.

4. The resin composition, curing agent composition, or dry coating composition of any preceding claim, wherein the weight ratio of barite to mica is equal to or greater than about 2.0 and equal to or less than about 5.0.

5. The resin composition or dry coating composition of any preceding claim, wherein:

   (i) the weight ratio of epoxy resin to barite is equal to or greater than about 1.0, for example equal to or greater than about 1.5, for example equal to or greater than about 2.0; and/or
   (ii) the weight ratio of epoxy resin to barite is equal to or less than about 5.0, for example equal to or less than about 4.0; and/or
   (iii) the weight ratio of epoxy resin to mica is equal to or greater than about 2.0, for example equal to or greater than about 3.0, for example equal to or greater than about 4.0; and/or
   (iv) the weight ratio of epoxy resin to mica is equal to or less than about 10.0, for example equal to or less than about 8.0; and/or
   (v) the weight ratio of epoxy resin to total inorganic particulate material is equal to or greater than about 0.5 and/or equal to or less than about 2.0.

6. The curing agent composition or the dry coating composition of any preceding claim, wherein:

   (i) the weight ratio of amine curing agent to barite is equal to or greater than about 0.5; and/or
   (ii) the weight ratio of amine curing agent to barite is equal to or less than about 2.0; and/or
   (iii) the weight ratio of amine curing agent to mica is equal to or less than about 1.0; and/or

(iv) the weight ratio of amine curing agent to mica is equal to or greater than about 2.5; and/or
(v) the weight ratio of amine curing agent to total inorganic particulate material is equal to or greater than about 0.1 and/or equal to or less than about 0.75.

**7.** The resin composition, curing agent composition, or dry coating composition of any preceding claim, further comprising titanium dioxide.

**8.** The resin composition, curing agent composition or dry coating composition of any preceding claim, wherein the resin composition, curing agent composition, or dry coating composition further comprises at least about 0.5 wt% silica.

**9.** The resin composition or curing agent composition of any preceding claim, wherein the resin composition is a waterborne resin composition or the curing agent composition is a waterborne curing agent composition.

**10.** A kit for making a coating composition, wherein the kit comprises:

(i) a resin composition according to any preceding claim and an amine curing agent; or
(ii) a curing agent composition according to any preceding claim and an epoxy resin;

wherein the resin and the curing agent are in separate containers.

**11.** The kit of claim 10, wherein all components of the kit are waterborne compositions.

**12.** A flooring having the dry coating composition of any preceding claim applied thereon.

**13.** A method of making a resin composition or curing agent composition of any preceding claim, the method comprising mixing a solvent, an epoxy resin or a curing agent, barite, mica, and optionally silica, wherein the weight ratio of barite to mica is equal to or greater than about 2.0.

**14.** A method of making a dry coating composition of any of any preceding claim, the method comprising mixing a solvent, an epoxy resin, an amine curing agent, barite, mica, and optionally silica under conditions suitable for the amine curing agent to crosslink the epoxy resin, and drying the mixture to remove the solvent, wherein the weight ratio of barite to mica is equal to or greater than about 2.0.

**15.** Use of mica to increase the hot tire resistance of a coating composition.

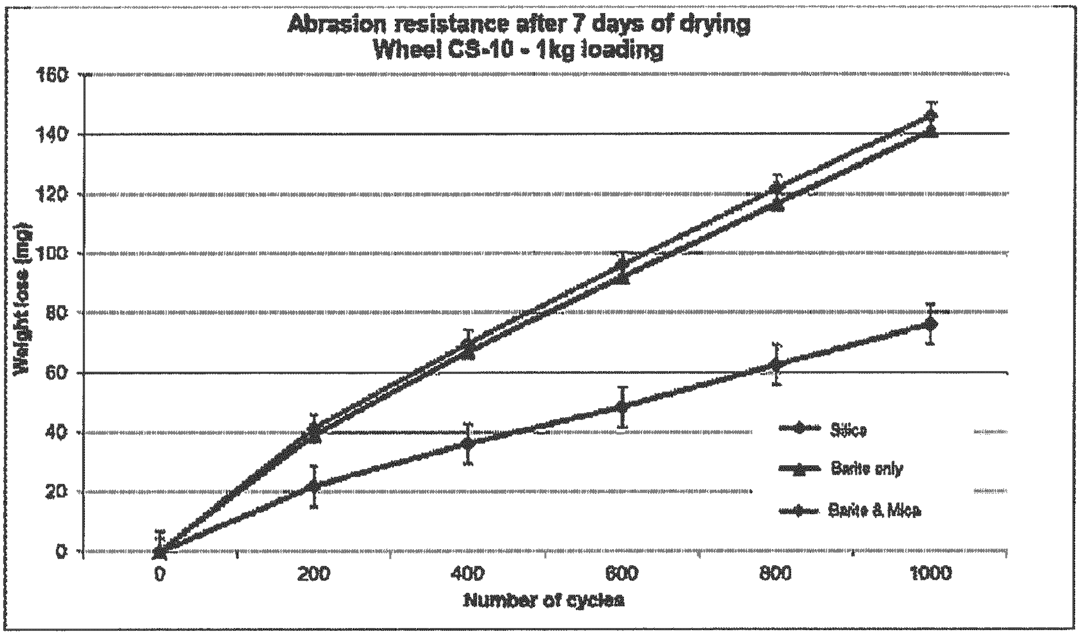
Abrasion resistance after 7 days of drying
Wheel CS-10 - 1kg loading
Weight loss (mg)
160
140
120
100
80
60
40
20
0
0
200
400
600
800
1000
Number of cycles
Silica
Barite only
Barite & Mica

FIG. 1

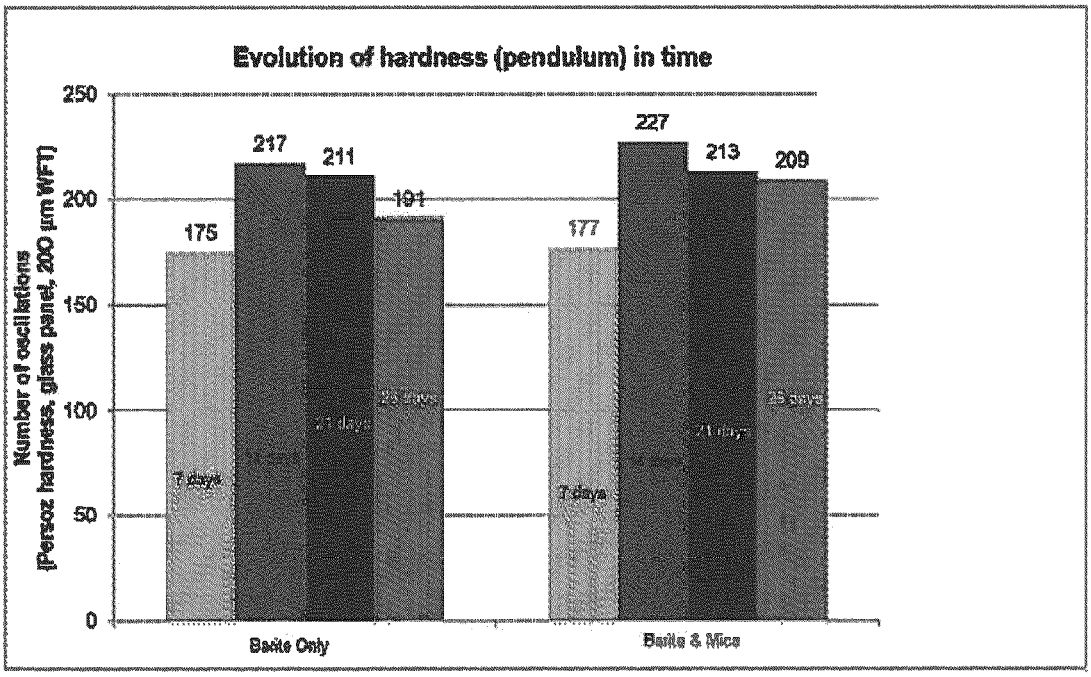
Evolution of hardness (pendulum) in time
Number of oscillations
(Persoz hardness, glass panel, 200 µm WFT)
250
200
150
100
50
0
175
217
211
191
177
227
213
209
7 days
21 days
28 days
Barite Only
Barite & Mica

FIG. 2

Europäisches Patentamt
European Patent Office
Office européen des brevets

# EUROPEAN SEARCH REPORT

Application Number
EP 19 29 0071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 100 519 680 C (GUANG ZHOU SUPE CHEMICAL CO LT [CN]) 29 July 2009 (2009-07-29)<br>* embodiment 1, embodiment 2, embodiment 3 *<br>* claims 1-10 * | 1-15 | INV.<br>C08L63/00<br>C09D163/00<br>C08G59/50 |
| X | CN 109 535 930 A (FUZHOU ROYAL FLOOR CO LTD) 29 March 2019 (2019-03-29)<br>* claims 1-4 * | 1,3,15 | |
| X | CN 109 354 969 A (SHANGHAI GUOLI POWDER COATING CO LTD)<br>19 February 2019 (2019-02-19)<br>* embodiments 1-13 *<br>* claims 1-10 * | 1-15 | |
| A | CN 109 535 931 A (FUZHOU ROYAL FLOOR CO LTD) 29 March 2019 (2019-03-29)<br>* claims 1-4 *<br>* examples 1-3 * | 1-15 | |

TECHNICAL FIELDS SEARCHED (IPC)

C08L
C09D
C08G

The present search report has been drawn up for all claims

1

| Place of search | Date of completion of the search | Examiner |
|---|---|---|
| The Hague | 10 December 2019 | Mensah, Laure |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 29 0071

This annex lists the patent family members relating to the patent documents cited in the above-mentioned European search report. The members are as contained in the European Patent Office EDP file on
The European Patent Office is in no way liable for these particulars which are merely given for the purpose of information.

10-12-2019

| Patent document cited in search report | Publication date | Patent family member(s) | Publication date |
|---|---|---|---|
| CN 100519680 C | 29-07-2009 | NONE | |
| CN 109535930 A | 29-03-2019 | NONE | |
| CN 109354969 A | 19-02-2019 | NONE | |
| CN 109535931 A | 29-03-2019 | NONE | |

EPO FORM P0459

For more details about this annex : see Official Journal of the European Patent Office, No. 12/82